# EUROPEAN PATENT APPLICATION

(11) **EP 2 998 855 A1**
(43) Date of publication of application: **23.03.2016**
(21) Application number: 15186199.4
(22) Date of filing: 22.09.2015
(51) Int. Cl.: G06F 3/0488, G06F 3/0484

(54) **METHOD AND APPARATUS FOR INPUTTING OBJECT IN ELECTRONIC DEVICE**

(30) Priority: 22.09.2014 KR 20140125966
(71) Applicant: Samsung Electronics Co., Ltd., Gyeonggi-do 16677 (KR)
(72) Inventor: Kim, Geonsoo, 16677 Suwon-si (KR); Jeon, Yongjoon, 16677 Suwon-si (KR)
(74) Representative: Nederlandsch Octrooibureau

(57) **Abstract**

An electronic device and a method of inputting an object are provided. The electronic device includes interpreting an object input through an application, enlarging and displaying at least some data in accordance with a result of the analysis of the object, and displaying a new object on an enlarged area.

## Description

### Technical Field

The present disclosure relates to an electronic device. More particularly, the present disclosure relates to a method of inputting an object and an electronic device therefor.

### Background

With development of a mobile communication technology, various electronic devices, which can perform mobile communication, are used by individuals. Such electronic devices are carried and used to perform various functions as well as a voice communication function based on a mobile communication technology. Functions performed by the electronic devices in addition to the voice communication function may include various additional functions such as a camera function, an object communication function, a video reproduction function, an audio reproduction function, a messenger function, a scheduler function, an alarm function, and the like.

In this way, as the electronic device performs various functions, input schemes of the electronic device also become diversified. The most basic input scheme of the electronic device corresponds to a key input scheme using a hardware key. However, a touch pad scheme is increasingly being used as the input scheme of a terminal instead of the hardware key input scheme. The touch pad scheme can improve convenience and enhance user experience (UX), thereby providing convenient services.

In recent years, terminals have been released which provide an input scheme using a pen in addition to the touch pad scheme. An apparatus and method are provided which can provide more convenient UX to a user through such an input using a pen and can freely input a character, a symbol, a figure, a picture, etc. using a pen by a user.

The above information is presented as background information only to assist with an understanding of the present disclosure. No determination has been made, and no assertion is made, as to whether any of the above might be applicable as prior art with regard to the present disclosure.

### SUMMARY

An electronic device using the touch pad scheme and/or a pen has a problem in that an object (e.g., an object input using a touch, a hovering, or a pen) directly input on a screen by a user is proportional to the size of the screen, and thus contents or an amount which can be input by a user is limited. Further, the electronic device has a problem in that, when a large number of objects should be input, a larger screen is necessary, but the size of the screen of a terminal is limited, and thus, it is difficult to input a large amount of contents.

Aspects of the present disclosure are to address at least the above-mentioned problems and/or disadvantages and to provide at least the advantages described below. Accordingly, an aspect of the present disclosure is to provide a method and apparatus which can improve convenience of a user when the user directly inputs an object.

Another aspect of the present disclosure is to provide a method and apparatus which can input a larger number of objects when a user directly inputs an object.

Yet another aspect of the present disclosure is to provide a method and apparatus for synchronizing a picture object input by a user with a schedule of an electronic device when the user directly inputs an object.

Still another aspect of the present disclosure is to provide a method and apparatus for managing an object directly input on a screen by a user.

Yet another aspect of the present disclosure is to provide a method and apparatus for additionally performing inputting in a limited area in an electronic device.

In accordance with an aspect of the present disclosure, a method of inputting an object in an electronic device is provided. The method includes interpreting an object input through an application, enlarging and displaying at least some data in accordance with a result of the analysis of the object, and receiving a new object and displaying the new object on an enlarged area.

In accordance with an aspect of the present disclosure, an electronic device is provided. The electronic device includes a display configured to display a character or a graphic, a memory configured to store an application or object data input by a user, an input/output interface configured to receive the object data from a user, and a processor configured to control to, when an object for requesting designation of a range of some data displayed on the display and enlargement of the designated range is input via the input/output interface, enlarge and display the designated range on the display, to control to, when an object is input on the enlarged area via the input/output interface, display the input object on the display, and to control to, when it is requested to store the input object, store the input object at the designated range in the memory together.

When a method and apparatus according to various embodiments of the present disclosure are applied to an electronic device, if a user directly inputs an object, convenience of a user can be improved, and a larger number of objects can be input.

Further, when a method and apparatus according to various embodiments of the present disclosure are applied to an electronic device, if a user directly inputs an object, a picture object input by the user can be synchronized with a schedule of the electronic device, and an object input on a screen by a user can be managed.

In addition, when a method and apparatus according to various embodiments of the present disclosure are applied to an electronic device, information can be additionally input in a limited area in the electronic device.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description in conjunction with the accompanying drawings, in which:
FIG. 1 illustrates a network environment including an electronic device, according to various embodiments of the present disclosure;
FIG. 2 is a block diagram illustrating an electronic device according to various embodiments of the present disclosure;
FIG. 3 is a signal flow diagram illustrating a communication protocol among a plurality of electronic devices according to various embodiments of the present disclosure;
FIG. 4 is a flowchart illustrating a method of recognizing an object input by a terminal according to various embodiments of the present disclosure;
FIG. 5 is a flowchart illustrating an object input operation according to various embodiments of the present disclosure;
FIG. 6 illustrates an example where objects are input on a monthly scheduling table according to various embodiments of the present disclosure;
FIG. 7 illustrates a detail data inputting pop-up window of scheduling data according to various embodiments of the present disclosure;
FIG. 8 illustrates an example of a user interface (UI) view in a state in which an important schedule is input in an electronic device according to various embodiments of the present disclosure;
FIG. 9 is a UI view illustrating various embodiments in which a handwritten input is recognized as an important schedule according to various embodiments of the present disclosure;
FIG. 10 is a UI view illustrating another embodiment in which a handwritten input is recognized as an important schedule according to various embodiments of the present disclosure;
FIGS. 11A and 11B are UI views illustrating a state in which an input object is recognized in a terminal according to various embodiments of the present disclosure;
FIG. 12 is a UI view illustrating a state in which an input object is called in an electronic device according to various embodiments of the present disclosure;
FIG. 13 illustrates a method of enlarging a schedule range when a range designation object is input in an electronic device according to an embodiment of the present disclosure;
FIG. 14 illustrates a case where a specific region is enlarged in order to input an object in an electronic device according to an embodiment of the present disclosure;
FIG. 15 illustrates an example of display conversion for inputting an object in an electronic device according to various embodiments of the present disclosure;
FIGS. 16A, 16B, 16C, 16D, and 16E illustrate a method of inputting and identifying an object in an electronic device according to various embodiments of the present disclosure; and
FIGS. 17A and 17B illustrate a method of displaying an input object on a screen in an electronic device according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The expressions such as "include" and "may include" which may be used in the present disclosure denote the presence of the disclosed functions, operations, and constituent elements and do not limit one or more additional functions, operations, and constituent elements. In the present disclosure, the terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Furthermore, in the present disclosure, the expression "and/or" includes any and all combinations of the associated listed words. For example, the expression "A and/or B" may include A, may include B, or may include both A and B.

In the present disclosure, expressions including ordinal numbers, such as "first" and "second," etc., may modify various elements. However, such elements are not limited by the above expressions. For example, the above expressions do not limit the sequence and/or importance of the elements. The above expressions are used merely for the purpose to distinguish an element from the other elements. For example, a first user device and a second user device indicate different user devices although both of them are user devices. For example, a first element could be termed a second element, and similarly, a second element could be also termed a first element without departing from the scope of the present disclosure.

In the case where a component is referred to as being "connected" or "accessed" to other component, it should be understood that not only the component is directly connected or accessed to the other component, but also there may exist another component between them. Meanwhile, in the case where a component is referred to as being "directly connected" or "directly accessed" to other component, it should be understood that there is no component therebetween. The terms used in the present disclosure are only used to describe specific various embodiments, and are not intended to limit the present disclosure. As used herein, the singular forms are intended to include the plural forms as well, unless the context clearly indicates otherwise. Singular forms are intended to include plural forms unless the context clearly indicates otherwise.

Unless defined otherwise, all terms used herein, including technical terms and scientific terms, have the same meaning as commonly understood by a person of ordinary skill in the art to which various embodiments of the present disclosure pertain. Such terms as those defined in a generally used dictionary are to be interpreted to have the meanings equal to the contextual meanings in the relevant field of art, and are not to be interpreted to have ideal or excessively formal meanings unless clearly defined in various embodiments of the present disclosure.

An electronic device according to various embodiments of the present disclosure may be a device including a communication function. For example, the electronic device may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), a digital audio player, a mobile medical device, a camera, a wearable device (e.g., a head-mounted-device (HMD) such as electronic glasses, electronic clothes, an electronic bracelet, an electronic necklace, an electronic accessory, an electronic tattoo, or a smart watch).

According to some embodiments, the electronic device may be a smart home appliance with a communication function. The smart home appliance as an example of the electronic device may include at least one of a television, a digital video disk (DVD) player, an audio, a refrigerator, an air conditioner, a vacuum cleaner, an oven, a microwave oven, a washing machine, an air cleaner, a set-top box, a television (TV) box (e.g., Samsung HomeSync™, Apple TV™, or Google TV™), a game console, an electronic dictionary, an electronic key, a camcorder, and an electronic picture frame.

According to some embodiments, the electronic device may include at least one of various medical appliances (e.g., magnetic resonance angiography (MRA), magnetic resonance imaging (MRI), computed tomography (CT), and ultrasonic machines), navigation equipment, a global positioning system (GPS) receiver, an event data recorder (EDR), a flight data recorder (FDR), automotive infotainment device, electronic equipment for ships (e.g., ship navigation equipment and a gyrocompass), avionics, security equipment, a vehicle head unit, an industrial or home robot, an automatic teller machine (ATM) of a banking system, and a point of sales (POS) of a shop.

According to some embodiments, the electronic device may include at least one of furniture or a part of a building/structure, an electronic board, an electronic signature receiving device, a projector, and various types of measuring devices (for example, a water meter, an electric meter, a gas meter, a radio wave meter and the like). The electronic device according to various embodiments of the present disclosure may be a combination of one or more of the aforementioned various devices. Further, the electronic device according to various embodiments of the present disclosure may be a flexible device. Further, it will be apparent to those skilled in the art that the electronic device according to various embodiments of the present disclosure is not limited to the aforementioned devices.

Hereinafter, an electronic device according to various embodiments of the present disclosure will be described with reference to the accompanying drawings. The term "user" as used in various embodiments of the present disclosure may indicate a person who uses an electronic device or a device (e.g., artificial intelligence electronic device) that uses an electronic device.

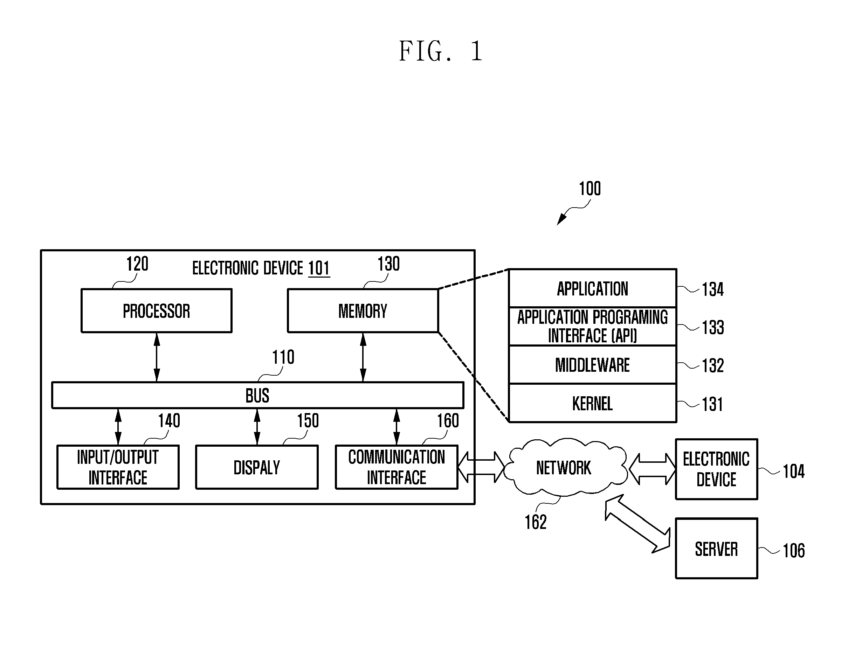

FIG. 1 illustrates a network environment 100 including an electronic device 101 according to various embodiments of the present disclosure.

Referring to FIG. 1, the electronic device 101 may include a bus 110, a processor 120, a memory 130, input/output interface 140, a display 150, a communication interface 160, and other similar and/or suitable components.

The bus 110 may be a circuit which interconnects the above-described elements and delivers a communication (e.g., a control message) between the above-described elements.

The processor 120 may receive commands from the above-described other elements (e.g., the memory 130, the input/output interface 140, the display 150, the communication interface 160, etc.) through the bus 110, may interpret the received commands, and may execute calculation or data processing according to the interpreted commands.

Hereinafter, it should be noted that such a processor may be called a "controller" for the convenience of the description. Further, the controller can be an application program for a specific operation or a state in which control data is driven.

A processor 120 according to various embodiments of the present disclosure can perform a control corresponding to various operations required for controlling the electronic device 101. For example, the processor 120 can perform a control for wireless communication when the electronic device 101 performs the wireless communication and can perform a control for performing an operation corresponding to a user's input when a specific operation corresponding to the user's input is performed. For example, when a user inputs a handwritten character to the electronic device 101, the processor 120 can receive a user's input through the input/output interface 140, control to display the user's input on the display 150 in response thereto, and control to store data in a specific area of the memory 130 when the corresponding data is requested to be stored.

For example, the processor 120 can control to display an input handwritten character on the display 150 when the handwritten character is input, and can store input data in a predetermined area of the memory when the input data is required to be stored, according to various embodiments of the present disclosure.

According to an embodiment, the processor 120 recognizes a schedule content corresponding to a schedule area when a handwritten character is recognized through an optical character recognition (OCR). The schedule area recognizes a closed curve or a figure close to the closed curve, an arrow, a bracket, or other figures limiting a range as the schedule area. Further, the processor 120 can recognize figures such as "v", "O", "□", "☆", and " 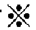 ", a sign, etc., which are marked at a date, as the schedule area. "

According to an embodiment, the processor 120 can recognize a period of an area (date) marked by the figures "v", "☆", and " 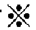 " from among signs marked at the schedule area, as an important schedule. Further, the processor 120 can recognize an area (date) marked by a circle or a quadrangle such as the figure "O" and "□" as an example of a closed curve or a closed polygon from among the signs marked at the schedule area, as a normal schedule.

The processor 120 can process a schedule content input in accordance with the schedule area as a schedule to correspond to an image or a character recognized by an OCR. At this time, the character recognized by an OCR can be stored together with an original picture image in which a handwritten character is input. The processor 120 can control to enlarge and display a window on which a schedule content is correspondingly input, when a schedule is input. At this time, a window displayed on the display 150 may be displayed by enlarging the window to a desired size in an enlarging operation such as zooming-in using a touch gesture through the input/output interface 140 by a user or may be displayed in a first enlarged size or the entire screen in accordance with a user's interaction. The enlarged screen can enlarge and display the corresponding schedule area and a schedule can be input on an enlarged area through handwriting. As another example, the processor 120 can control to darkly or semi-transparently display an area other than a schedule area displayed on the display 150 maintain while maintaining the size of the schedule area. At this time, when a handwritten character is input on the entire screen displayed in this way through the input/output interface 140, the processor 120 can control to store the input handwritten character to match with the corresponding scheduling area.

Meanwhile, the processor 120 can control to notify that a schedule is approaching through an audio output apparatus of the input/output interface 140 or to notify that the corresponding schedule has arrived by outputting a beep sound, a melody, a predetermined music, or the like.

The memory 130 may store commands or data received from the processor 120 or other elements (e.g., the input/output interface 140, the display 150, the communication interface 160, etc.) or generated by the processor 120 or the other elements. The memory 130 may include programming modules, such as a kernel 131, middleware 132, an application programming interface (API) 133, an application 134, and the like. Each of the above-described programming modules may be implemented in software, firmware, hardware, or a combination of two or more thereof.

The kernel 131 may control or manage system resources (e.g., the bus 110, the processor 120, the memory 130, etc.) used to execute operations or functions implemented by other programming modules (e.g., the middleware 132, the API 133, and the application 134). Also, the kernel 131 may provide an interface capable of accessing and controlling or managing the individual elements of the electronic device 101 by using the middleware 132, the API 133, or the application 134.

The middleware 132 may serve to go between the API 133 or the application 134 and the kernel 131 in such a manner that the API 133 or the application 134 communicates with the kernel 131 and exchanges data therewith. Also, in relation to work requests received from one or more applications 134 and/or the middleware 132, for example, may perform load balancing of the work requests by using a method of assigning a priority, in which system resources (e.g., the bus 110, the processor 120, the memory 130, etc.) of the electronic device 101 can be used, to at least one of the one or more applications 134.

The API 133 is an interface through which the application 134 is capable of controlling a function provided by the kernel 131 or the middleware 132, and may include, for example, at least one interface or function for file control, window control, image processing, character control, or the like.

According to various embodiments, the application 134 may include a short message service (SMS)/multimedia message service (MMS) application, an e-mail application, a calendar application, an alarm application, a health care application (e.g., an application for measuring an amount of exercise or blood sugar), and an environmental information application (e.g., an application for providing an atmospheric pressure, humidity, temperature, and the like). Additionally or alternatively, the application 134 may include an application related to an information exchange between the electronic device 101 and an external electronic device (e.g., an electronic device 104). The application related to the information exchange may include, for example, a notification relay application for transferring specific information to the external electronic device or a device management application for managing the external electronic device.

For example, the notification relay application may include a function of transferring, to the external electronic device (e.g., the electronic device 104), notification information generated from other applications of the electronic device 101 (e.g., an SMS/MMS application, an e-mail application, a health management application, an environmental information application, and the like). Additionally or alternatively, the notification relay application may receive notification information from, for example, the external electronic device (e.g., the electronic device 104) and provide the received notification information to a user. For example, the device management application may manage (e.g., install, delete, or update) functions for at least a part of the external electronic device (e.g., the electronic device 104) communicating with the electronic device 101 (e.g., turning on/off the external electronic device itself (or some elements thereof) or adjusting the brightness (or resolution) of a display), applications operating in the external electronic device, or services (e.g., a telephone call service or a message service) provided from the external electronic device.

According to various embodiments, the application 134 may include an application designated according to an attribute (e.g., a type of the electrode device) of the external electronic device (e.g., the electronic device 104). For example, when the external electronic device is a digital audio player, the application 134 may include an application related to music reproduction. Similarly, when the external electronic device is a mobile medical appliance, the application 134 may include an application related to health care. According to an embodiment, the application 134 may include at least one of an application designated to the electronic device 101 and an application received from the external electronic device (e.g., a server 106 or the electronic device 104).

Further, the memory 130 can have an area for storing various pieces of control data for performing a specific operation in the electronic device 101 or data according to a user's convenience. Here, the control data may be application data, and the data according to user's convenience may be data input by a user or data desired by a user to be stored or data received through a network. Further, the memory 130 can recognize a handwritten character input in a handwriting mode as a specific character and then store the character or can store an input image as it is according to various embodiments of the present disclosure. Data stored in the memory 130 in the handwriting mode may be stored in accordance with a schedule area.

Further, the memory 130 can store alarm information, pop-up information, other settings according to a corresponding schedule, etc. according to a setting of a schedule application. For example, when an input schedule is an important schedule, the memory 130 can store a corresponding schedule content in a state in which the contents area is matched with a schedule. At this time, data stored in the memory 130 may be stored in a color, a size, a font, etc. corresponding to the important schedule.

The input/output interface 140 may transfer an instruction or data input from a user through an input/output device (e.g., a sensor, a keyboard, or a touch screen) to the processor 120, the memory 130, and the communication interface 160 through, for example, the bus 110. For example, the input/output interface 140 may provide, to the processor 120, data for a user's touch input through the touch screen. Further, the input/output interface 140 may output an instruction or data received from the processor 120, the memory 130, or the communication interface 160 through the bus 110, through the input/output device (e.g., a speaker or a display). For example, the input/output interface 140 may output voice data, processed through the processor 120, to a user through a speaker.

The input/output interface 140 can be implemented in various types of input devices such as a key input device (not illustrated), an OCR, an optical mark reader (OMR), a touch sensor, a pen sensor and/or a short-range input sensor. The input/output interface 140 can receive a signal corresponding to a user's input from such various types of input devices and convert the received signal into digital data to provide the converted digital data to the processor 120.

Further, the input/output interface 140 can include a configuration for processing various types of audio signals input or output from the electronic device 101. For example, the input/output interface 140 can include a configuration (e.g., a speaker, etc.) for outputting audio.

The display 150 can display various pieces of information (e.g., multimedia data, text data, etc.) to a user. Such a display 150 can display, to a user, a state in which a status or an operation of the electronic device 101 is performed, in various forms such as a graphic, a character, various types of icons, etc. Further, the display 150 can display a handwritten character input by a user according to the present disclosure. Such a display 150 can be implemented in various forms such as a liquid crystal display (LCD), a light emitting diode (LED), an organic light emitting diode (OLED), etc.

The communication interface 140 can connect communication between the electronic device 101 and the external electronic device (e.g., the electronic device 104 or the server 106). For example, the communication interface 160 can be connected to a network 162 through wireless or wired communication to communicate with the external device. The wireless communication may include at least one of, for example, Wireless Fidelity (Wi-Fi), bluetooth (BT), near field communication (NFC), GPS and cellular communication (e.g., long term evolution (LTE), LTE-A, code division multiple access (CDMA), wideband CDMA (WCDMA), universal mobile telecommunication system (UMTS), wireless broadband (WiBro), and global system for mobile communication (GSM)). The wired communication may include at least one of, for example, a universal serial bus (USB), a high definition multimedia interface (HDMI), recommended standard 232 (RS-232), and a plain old telephone service (POTS). Data transmitted/received through the communication interface 160 may be various types of data such as voice, video, an object, etc.

According to an embodiment, the network 162 may be a communication network. The communication network may include at least one of a computer network, the Internet, the Internet of Things, and a telephone network. According to an embodiment, a protocol (e.g., a transport layer protocol, a data link layer protocol, or a physical layer protocol) for communication between the electronic device 101 and the external device may be supported by at least one of the application 134, the API 133, the middleware 132, the kernel 131, and the communication interface 160.

According to an embodiment, the server 106 may support the driving of the electronic device 101 by performing at least one operation of operations (or functions) implemented in the electronic device 101.

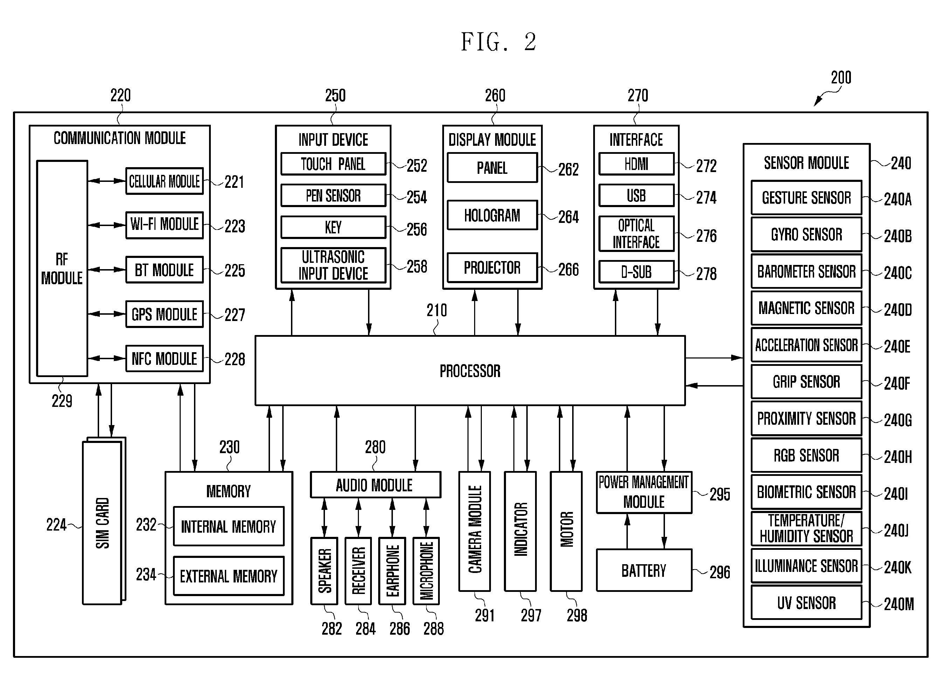

FIG. 2 is a block diagram illustrating an electronic device according to various embodiments of the present disclosure.

An electronic device 201 may form, for example, a part or the entirety of the electronic device 101 illustrated in FIG. 1.

Referring to FIG. 2, the hardware 200 may include one or more processors 210, a subscriber identification module (SIM) card 224, a memory 230, a communication module 220, a sensor module 240, an input device 250, a display module 260, an interface 270, an audio module 280, a camera module 291, a power management module 295, a battery 296, an indicator 297, a motor 298 and any other similar and/or suitable components.

The one or more processors 210 can control a plurality of hardware or software elements connected to the one or more processors 210 by driving an operating system or an application program and process and calculate various types of data including multimedia data. The one or more processors 210 may be implemented as, for example, a system on chip (SoC). According to an embodiment, the one or more processors 210 may further include a graphic processing unit (GPU) (not illustrated).

The communication module 220 (e.g., the communication interface 160) can perform data transmission/reception in communication between the electronic device 201 (e.g., the electronic device 201) and other electronic devices (e.g., the electronic device 104 and the server 106) connected thereto through a network. According to an embodiment, the communication module 220 may include a cellular module 221, a Wi-Fi module 223, a BT module 225, a GPS module 227, an NFC module 228, and a radio frequency (RF) module 229.

The cellular module 221 can provide a voice call, a video call, a text message service, or an Internet service through a communication network (e.g., LTE, LTE-A, CDMA, WCDMA, UMTS, WiBro, or GSM). Further, the cellular module 221 can perform identification and authentication of electronic devices in a communication network using, for example, a SIM (e.g., the SIM card 224). According to an embodiment, the cellular module 221 can perform at least some functions of functions which can be provided by the one or more processors 210. For example, the cellular module 221 can perform at least a part of a multimedia control function.

According to an embodiment, the cellular module 221 may include a communication processor (CP). Further, the cellular module 221 may be implemented as, for example, an SoC. In FIG. 2, the elements such as the cellular module 221 (e.g., a communication processor), the memory 230, and the power management module 295, etc. are illustrated to be separate from the one or more processors 210. However, according to an embodiment, the one or more processors 210 may be implemented to include at least some of the aforementioned elements (e.g., the cellular module 221).

According to an embodiment, the one or more processors 210 or the cellular module 221 (e.g., the CP) can load an instruction or data received from at least one of a non-volatile memory and other components connected thereto into a volatile memory and process the loaded instruction or data. Further, the one or more processors 210 or the cellular module 221 can store, in a non-volatile memory, data received from or generated by at least one of other component elements.

The Wi-Fi module 223, the BT module 225, the GPS module 227, and the NFC module 228 may include, for example, a processor for processing data transmitted/received through the corresponding modules. In FIG. 2, the cellular module 221, the Wi-Fi module 223, the BT module 225, the GPS module 227, and the NFC module 228 are illustrated separately. However, according to an embodiment, at least some (e.g., two or more) of the cellular module 221, the Wi-Fi module 223, the BT module 225, the GPS module 227, and the NFC module 228 may be included in one integrated chip (IC) or one IC package. For example, at least some (e.g., the CP corresponding to the cellular module 221 and the Wi-Fi processor corresponding to the Wi-Fi module 223) of the processors corresponding to the cellular module 221, the Wi-Fi module 223, the BT module 225, the GPS module 227, and the NFC module 228 may be implemented as one SoC.

The RF module 229 can transmit/receive data, for example, an RF signal. Although not illustrated, the RF module 229 may include, for example, a transceiver, a power amp module (PAM), a frequency filter, a low noise amplifier (LNA) or the like. Further, the RF module 229 may further include a component for transmitting/receiving electronic waves over a free air space in wireless communication, for example, a conductor, a conducting wire or the like. Although it is illustrated that the cellular module 221, the Wi-Fi module 223, the BT module 225, the GPS module 227, and the NFC module 228 share one RF module 229 with each other in FIG. 2, according to an embodiment, at least one of the cellular module 221, the Wi-Fi module 223, the BT module 225, the GPS module 227, and the NFC module 228 can transmit/receive an RF signal through a separate RF module.

The SIM card 224 may be a card including a subscriber identification module, and may be inserted into a slot formed in a particular portion of the electronic device 101. The SIM card 224 may include unique identification information (e.g., integrated circuit card IDentifier (ICCID)) or subscriber information (e.g., international mobile subscriber identity (IMSI)).

The memory 230 may include an internal memory 232 and an external memory 234. The memory 230 may be, for example, the memory 130 illustrated in FIG. 1. The internal memory 232 may include, for example, at least one of a volatile memory (e.g., a dynamic RAM (DRAM), a static RAM (SRAM), a synchronous dynamic RAM (SDRAM), etc.), and a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a not AND (NAND) flash memory, a not OR (NOR) flash memory, etc.). According to an embodiment of the present disclosure, the internal memory 222 may be in the form of a solid state drive (SSD). The external memory 234 may further include a flash drive, for example, a compact flash (CF), a Secure Digital (SD), a micro-secure digital (Micro-SD), a mini-secure digital (Mini-SD), an extreme Digital (xD), a memory stick, or the like.

According to an embodiment, the internal memory 232 may be a SSD. The external memory 234 may further include a flash drive, for example, a CF, a SD, a Micro-SD, a mini secure digital (Mini-SD), an xD, a memory stick, or the like. The external memory 234 may be functionally connected with the electronic device 201 through various interfaces. According to an embodiment, the electronic device 201 may further include a storage device (or storage medium) such as a hard drive.

The sensor module 240 may measure a physical quantity or detect an operation state of the electronic device 201, and may convert the measured or detected information into an electrical signal.

The sensor module 240 may include, for example, at least one of a gesture sensor 240A, a gyro sensor 240B, a biometric sensor 240C, a magnetic sensor 240D, an acceleration sensor 240E, a grip sensor 240F, a proximity sensor 240G, a Red, Green and Blue (RGB) sensor 240H, a biometric sensor 2401, a temperature/humidity sensor 240J, an illuminance sensor 240K, and a ultra violet (UV) sensor 240M. The sensor module 240 may measure a physical quantity or may sense an operating state of the electronic device 101, and may convert the measured or sensed information to an electrical signal. Additionally/alternatively, the sensor module 240 may include, for example, an E-nose sensor (not illustrated), an electroMyoGraphy (EMG) sensor (not illustrated), an electroEncephaloGram (EEG) sensor (not illustrated), an electroCardioGram (ECG) sensor (not illustrated), a fingerprint sensor (not illustrated), and the like. Additionally or alternatively, the sensor module 240 may include, for example, an E-nose sensor (not illustrated), an EMG sensor (not illustrated), an EEG sensor (not illustrated), an ECG sensor (not illustrated), a fingerprint sensor, and the like. The sensor module 240 may further include a control circuit (not illustrated) for controlling one or more sensors included therein.

The input device 250 may include a touch panel 252, a (digital) pen sensor 254, a key 256, or an ultrasonic input device 258. The touch panel 252 may recognize a touch input in at least one of, for example, a capacitive scheme, a resistive scheme, an infrared scheme, and an acoustic wave scheme. Further, the touch panel 252 may further include a control circuit. In the case of the capacitive type, physical contact or proximity recognition is possible. The touch panel 252 may further include a tactile layer. In this case, the touch panel 252 may provide a tactile response to a user.

The (digital) pen sensor 254 may be implemented, for example, using a method that is the same as or similar to receiving a user's touch input, or using a separate recognition sheet. The key 256 may include, for example, a physical button, an optical key, or a keypad. The ultrasonic input device 258, which is a device capable of identifying data by detecting an acoustic wave with a microphone (e.g., the microphone 288) of the electronic device 201 through an input unit generating an ultrasonic signal, can perform wireless recognition. According to an embodiment, the electronic device 201 may also receive a user input from an external device (for example, a computer or a server) connected thereto using the communication module 220.

The display module 260 (e.g., the display 150) may include a panel 262, a hologram device 264, or a projector 266. The panel 262 may be, for example, an LCD, an active matrix organic light emitting diode (AM-OLED) display, and the like. The panel 262 may be implemented so as to be, for example, flexible, transparent, or wearable. The panel 262 may be configured as one module together with the touch panel 252. The hologram device 264 can show a stereoscopic image in the air using interference of light. The projector 266 may project light onto a screen to display an image. The screen may be located, for example, inside or outside the electronic device 201. According to an embodiment, the display module 260 may further include a control circuit for controlling the panel 262, the hologram device 264, or the projector 266.

The interface 270 may include, for example, a high-definition multimedia interface (HDMI) 272, a USB 274, an optical interface 276, or a D-subminiature (D-sub) 278. The interface 270 may be included in, for example, the communication interface 160 illustrated in FIG. 1. Additionally or alternatively, the interface 270 may include, for example, a mobile high-definition link (MHL) interface, a SD card/multi-media card (MMC) interface, or an infrared data association (IrDA) standard interface.

The audio module 280 may bilaterally convert a sound and an electronic signal. At least some components of the audio module 280 may be included in, for example, the input/output interface 140 illustrated in FIG. 1. The audio module 280 may process sound information input or output through, for example, the speaker 282, the receiver 284, the earphone 286, the microphone 788 or the like.

The camera module 291 is a device that can take still and moving images, and according to an embodiment, may include one or more image sensors (e.g., a front sensor or a rear sensor), a lens (not illustrated), an image signal processor (ISP) (not illustrated), or a flash (e.g., an LED or a xenon lamp; not illustrated).

The power management module 295 may manage power of the electronic device 101. Although not illustrated, the power management module 295 may include, for example, a power management integrated circuit (PMIC), a charger integrated circuit (IC), or a battery or fuel gauge.

The power management module 295 may manage power of the hardware 200. Although not illustrated, the power management module 295 may include, for example, a PMIC, a charger IC, or a battery fuel gauge.

The PMIC may be mounted to, for example, an IC or a SoC semiconductor. Charging methods may be classified into a wired charging method and a wireless charging method. The charger IC may charge a battery, and may prevent an overvoltage or an overcurrent from a charger to the battery. According to an embodiment of the present disclosure, the charger IC may include a charger IC for at least one of the wired charging method and the wireless charging method. Examples of the wireless charging method may include a magnetic resonance method, a magnetic induction method, an electromagnetic method, and the like. Additional circuits (e.g., a coil loop, a resonance circuit, a rectifier, etc.) for wireless charging may be added in order to perform the wireless charging.

The battery gauge can measure, for example, a remaining quantity of the battery 296, or a voltage, a current, or a temperature during charging. The battery 296 can store or generate electricity, and may supply power to the electronic device 101 by using the stored or generated electricity. The battery 296 may include, for example, a rechargeable battery or a solar battery.

The indicator 297 may indicate particular states of the electronic device 201 or a part (e.g., the one or more processors 210) of the hardware 200, for example, a booting state, a message state, a charging state and the like. The motor 298 may convert an electrical signal into a mechanical vibration. The one or more processors 210 may control the sensor module 240.

Although not illustrated, the electronic device 201 may include a processing device (e.g., a GPU) for supporting a mobile TV. The processing device for supporting the mobile TV can process media data according to standards, for example, a digital multimedia broadcasting (DMB), a digital video broadcasting (DVB), a media flow, or the like.

Each of the above described elements of the electronic device according to various embodiments of the present disclosure may be formed of one or more components, and the name of a corresponding element may vary according to the type of an electronic device. The electronic device according to various embodiments of the present disclosure may include at least one of the above described elements and may exclude some of the elements or further include other additional elements. Further, some of the elements of the electronic device according to various embodiments of the present disclosure may be coupled to form a single entity while performing the same functions as those of the corresponding elements before the coupling.

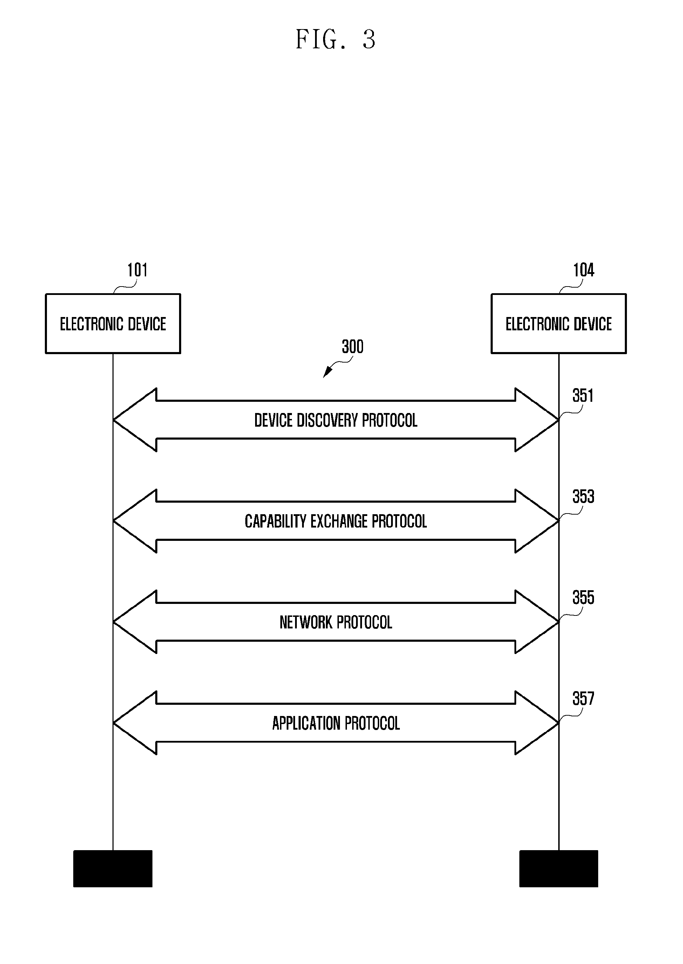

FIG. 3 illustrates a communication protocol among a plurality of electronic devices according to various embodiments of the present disclosure.

Referring to FIG. 3, for example, the communication protocol 300 may include a device discovery protocol 351, a capability exchange protocol 353, a network protocol 355, an application protocol 357, and the like.

According to an embodiment, the device discovery protocol 351 may be a protocol that allows the electronic devices (e.g., the electronic device 101 or the electronic device 104) to detect an external electronic device capable of communicating therewith or connect the detected external electronic device thereto. For example, using the device discovery protocol 351, the electronic device 101 can detect the electronic device 104 as a device that can communicate therewith, through a communication method (e.g., Wi-Fi, BT, or USB) that can be used in the electronic device 101. For communication with the electronic device 104, the electronic device 101 can acquire and store identification information on the detected electronic device 104 using the device discovery protocol 351. For example, the electronic device 101 may establish the communication connection with the electronic device 104 based on at least one piece of the identification information.

According to some embodiments, the device discovery protocol 351 may be a protocol for mutual authentication between the plurality of electronic devices. For example, the electronic device 101 can perform an authentication between the electronic device 101 and the electronic device 104 based on communication information (e.g., a media access control (MAC) address, a universally unique identifier (UUID), a subsystem identification (SSID), and an internet protocol (IP) address) for the connection with the electronic device 104.

According to an embodiment, the capability exchange protocol 353 may be a protocol for exchanging information related to a service function that can be supported by at least one of the electronic device 101 and the electronic device 104. For example, the electronic device 101 or the electronic device 104 can exchange information related to a service function currently provided by each of the electronic device 101 and the electronic device 104 through the capability exchange protocol 353. The exchangeable information may include identification information indicating a specific service among a plurality of services which can be supported by the electronic device 101 or the electronic device 104. For example, the electronic device 101 can receive, from the electronic device 104, identification information of a specific service provided by the electronic device 104 through the capability exchange protocol 353. In this case, the electronic device 101 can determine whether the electronic device 101 can support the specific service, based on the received identification information.

According to an embodiment, the network protocol 355 may be a protocol for controlling flow of data transmitted/received to interwork with and provide a service between the electronic devices (e.g., the electronic devices 101 and 104) connected to communicate with each other. For example, at least one of the electronic device 101 and the electronic device 104 can control an error or data quality using the network protocol 355. Additionally or alternatively, the network protocol 355 can determine a transmission format of data transmitted/received between the electronic device 101 and the electronic device 104. Further, at least one of the electronic device 101 and the electronic device 104 can at least manage a session (for example, connect or terminate a session) for a data exchange between the electronic devices using the network protocol 355.

According to an embodiment, the application protocol 357 may be a protocol for providing a procedure or information for exchanging data related to a service provided to an external electronic device. For example, the electronic device can provide a service to the electronic device 104 (or the server 106) through the application protocol 357.

According to an embodiment, the communication protocol 300 may include a standard communication protocol, a communication protocol designated by a person or an organization (e.g., a communication protocol autonomously designated by a communication device manufacturer, a network provider, or the like), and a combination thereof.

The term "module" used in the present disclosure may refer to, for example, a unit including one or more combinations of hardware, software, and firmware. The "module" may be interchangeable with a term, such as "unit," "logic," "logical block," "component," "circuit," or the like. The "module" may be a minimum unit of a component formed as one body or a part thereof. The "module" may be a minimum unit for performing one or more functions or a part thereof. The "module" may be implemented mechanically or electronically. For example, the "module" according to an embodiment of the present disclosure may include at least one of an application-specific integrated circuit (ASIC) chip, a field-programmable gate array (FPGA), and a programmable-logic device for performing certain operations which have been known or are to be developed in the future.

At least some of the devices (e.g., modules or functions thereof) or methods (e.g., operations) according to various embodiments of the present disclosure may be implemented by, for example, by a command stored in a non-transitory computer-readable storage medium in the form of a programming module. When the command is executed by one or more processors (for example, the processor 210), the one or more processors may execute a function corresponding to the command. The non-transitory computer-readable storage medium may be, for example, the memory 230. At least a part of the programming module may, for example, be implemented (e.g., executed) by the processor 210. At least a part of the programming module may, for example, include a module, a program, a routine, a set of instructions, or a process for performing at least one function.

The non-transitory computer-readable recording medium may include magnetic media such as a hard disc, a floppy disc, and a magnetic tape, optical media such as a compact disc read only memory (CD-ROM) and a DVD, magneto-optical media such as a floptical disk, and hardware devices specifically configured to store and execute program commands, such as a read only memory (ROM), a random access memory (RAM), and a flash memory. In addition, the program instructions may include high class language codes, which can be executed in a computer by using an interpreter, as well as machine codes made by a compiler. Any of the hardware devices as described above may be configured to work as one or more software modules in order to perform the operations according to various embodiments of the present disclosure, and vice versa.

Any of the modules or programming modules according to various embodiments of the present disclosure may include at least one of the above described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added.

An OCR is a device which reads a character using light, and a device which radiates light to a character, a symbol, a mark, etc. printed on paper or written by hand to convert reflection light thereof into an electric signal so as to input the converted electric signal to a computer. The OCR is mainly used for a bill or a receipt for tax or public utility. The OCR may be performed using a special readout device or may be performed using a small optical scanner and dedicated software. Although pattern matching and a stroke analysis method are mainly known as an OCR scheme, in recent years, a scheme such as recognition of a character written by hand is used more and more. The OCR performs reading-out through comparing a read character with a previously-stored character. Due to a reading characteristic of the OCR, there is a small error when a character is recognized.

An OMR, which is a device for simplifying a process of inputting data in a computer, etc., can read a specific sign such as a barcode, a mark sheet, etc. The OCR is a device for optically reading a character and the OMR is a device for optically reading a specific sign. The OMR also reads a mark sheet used in a barcode and an answer sheet of a test, etc.

According to an embodiment, an apparatus according to the present disclosure may include a display for displaying a character or a graphic; a memory for storing an application or object data input by a user, an input/output interface for receiving the object data from a user, and a processor for controlling to designate a range of a part of data displayed on the display by the input/output interface and enlarge and display the designated range on the display when an object for requesting enlargement of the designated range is input, controlling to display an input object on the display when the object is input on the enlarged area from the input/output interface, and controlling to store the input object at the designated range in the memory when storage of the input object is requested.

According to an embodiment, the processor of the apparatus according to the present disclosure can control to form a new layer to display the new layer as a higher layer of data being displayed on the display, when enlargement of the stored object is requested from the input/output interface.

According to an embodiment, the processor of the apparatus according to the present disclosure can control to display the input object on the display when an additional object is input on the new layer displayed on the display from the input/output interface and add the input object to the stored data and store the data in the memory when storage of the input object is requested.

According to an embodiment, the processor of the apparatus according to the present disclosure can identify an input as the range designation when an object such as a figure, an arrow, a symbol, a closed curve, and closed polygon, which are predetermined, is input.

According to an embodiment, in the apparatus according to the present disclosure, data displayed on the data may be data related to a schedule, a calendar, or time.

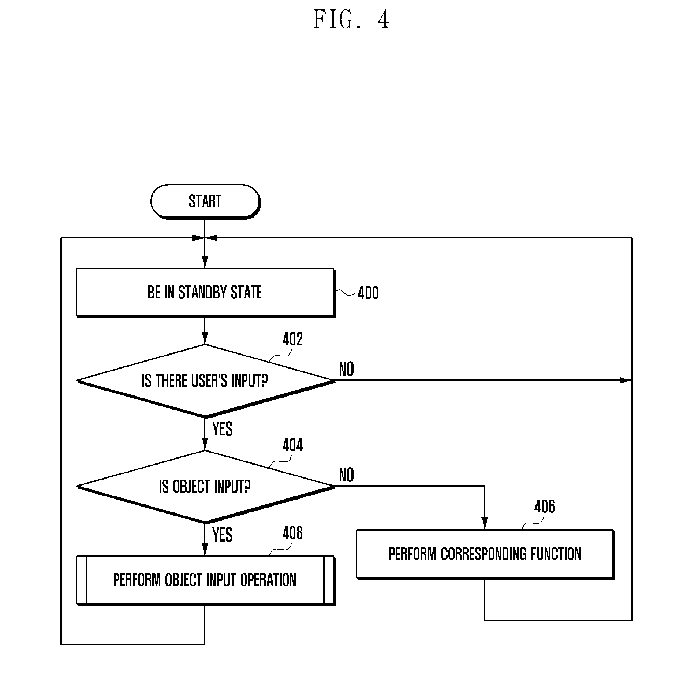

FIG. 4 is a flowchart illustrating a method of recognizing an object input by a terminal according to various embodiments of the present disclosure.

Referring to FIG. 4, in operation 400, the electronic device 101 enters a standby state. According to an embodiment, the standby state may be a state in which the electronic device 101 waits for a user's input or an input of a specific object without driving an application program or an application. According to some embodiments, the standby state of the electronic device 101 may be a state in which the electronic device 101 waits for an input of a specific object input by a user while a specific application or application program is driven. For example, the state may be states in which various types of application programs are driven, such as a state in which a scheduling application is driven and a state in which a specific memo or a user's note is input.

In this way, in a standby state, the processor 120 of the electronic device 101 can check whether a user's input exists, through the input/output interface 140, in operation 402. The user's input may be various types of inputs. For example, the user's input may be various inputs such as an input of a key (not illustrated) provided in the electronic device 101, a user's touch input, a hovering input, a user's gesture input based on a proximity sensor (not illustrated) or a motion sensor (not illustrated), an input of a picture or a video using a specific camera (not illustrated), etc.

When it is determined in operation 402 that there is no user's input, the processor 120 maintains the standby state of operation 400. Meanwhile, when it is determined in operation 402 that there is a user's input, the processor 120 checks whether the user's input which is input through the input/output interface 140 is an object input or a selection for an object input, in operation 404. In the following description, the object input may imply an input of an object using a specific input scheme, for example, using a part of a human body, a pen, etc. Here, an input using a part of a human body may be a direct touch input, a hovering input, etc. and in an input of a pen, the pen may be a general pen, an electronic pen having a specific function, a dedicated pen, etc. Further, the selection for the object input may include changing of a display for an object input with regard to a specific area, for example, a case where enlargement or reduction is required.

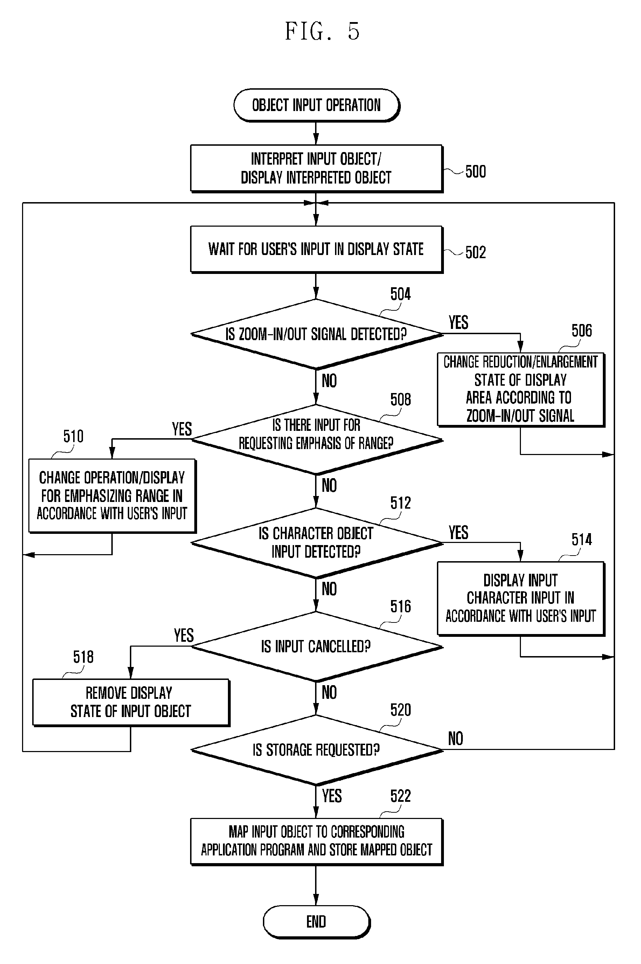

When it is determined in operation 404 that there is an input of an object or selection of a display for an object input is required, the processor 120 proceeds to operation 408, or else the processor 120 proceeds to operation 406, and thereafter, the processor 120 performs an operation corresponding to the user's input. For example, the user's input corresponding to operation 406 may be various types of inputs such as a user's key input except for a case where changing of a display for an object input is required, a touch input and a touch-and-drag input in a state in which object input recognition is not performed, etc. When proceeding to operation 408, the processor 120 performs an operation corresponding to the object input. The object input operation in operation 408 will be described in more detail with reference to FIG. 5.

FIG. 5 is a flowchart illustrating an object input operation according to various embodiments of the present disclosure.

In operation 500, the processor 120 can interpret an input object, and display the interpreted object.

According to an embodiment, in the operation of interpreting an input object, when it is interpreted that the input object indicates a specific range, the processor 120 can control to enlarge and display the corresponding area in order to increase convenience for inputting a new object in the corresponding range. At this time, a range input may have various forms. For example, the input of a range may be a closed curve, a closed polygon, a form indicating a range in each country or custom, etc. Examples of the closed curve may be a circle, an ellipse, a distorted circle, etc. and examples of the closed polygon may be a triangle, a quadrangle, a pentagon, a hexagon, a star shape, etc. Further, examples of the form indicating a range in each custom may be a form "<---->" for indicating a range from a specific location to another specific location and a form "---->" or a form "<----" for indicating a range from a start point to a specific location.

As another example, an object in which an input by a user indicates a schedule area may be a sign indicating a schedule area, or a straight line "□->" obtained by selecting a number and moving the corresponding number. The processor 120 can use a closed curve "□", open curves "⊂", "∪", "⊃" "∩", and punctuation marks "{", "}", "[", "]", "(", and ")" as a sign indicating a specific area. In addition, there may be various schemes for indicating a range in each region, each country, or in each ethnic group, and various embodiments of the present disclosure do not limit the schemes.

According to an embodiment, when the input object is interpreted as a handwritten input (e.g., a handwritten character) of a user on a predetermined area, the processor 120 can control to enlarge and display the corresponding area in order to increase convenience for inputting an object by a user in the corresponding area. For example, when a schedule for a specific date is to be stored, if an object input exists at the corresponding date, the processor 120 can enlarge an area corresponding to a date at which an object is input.

In operation 500, after an input object is interpreted and the interpreted object is displayed, the processor 120 proceeds to operation 502 to wait for a user's input from the input/output interface 140 in a state in which the corresponding data is displayed on the display 150.

In operation 502, while waiting for a user's input, the processor 120 can detect a specific input from the input/output interface 140. The detection of the specific input may correspond to detection of zoom-in/out in operation 504, detection of whether an object is input in operation 512, detection of cancellation of an input in operation 516, and detection of whether a storage request is input in operation 520.

When it is determined in operation 504 that zoom-in/out is detected by the input/output interface 140, the processor 120 proceeds to operation 506 to change a reduction/enlargement state of a displayed area. For example, when a specific area is selected, if a zoom-in input is detected in a state in which the selected area is enlarged to a predetermined size and displayed on the display 150, the processor 120 reduces and displays the enlarged area. In contrast, when a specific area is selected, if a zoom-out input is detected in a state in which the selected area is enlarged to a predetermined size and displayed on the display 150, the processor 120 enlarges and displays the enlarged area. At this time, the enlargement and the reduction may be performed in accordance with a moving distance of the zoom-in/out.

According to an embodiment, when it is determined in operation 508 that an input signal for requiring emphasis of a range is received from the input/output interface 140, the processor 120 can perform an operation of emphasizing a specific area selected in accordance with a signal input by a user or emphasizing a range in accordance with an input for selection, in operation 510. For example, when a specific date on a schedule is selected in a form of a closed curve or a closed polygon, if there is an input corresponding to emphasis of a range of the corresponding date, the processor can emphasize a range with regard to the selected date in accordance with a user's input, in operation 510. Operation 510 will be described with reference to an input within a scheduling table displayed for each month. When emphasis of an object received from the input/output interface 140 is required in a state in which the object is displayed as a black circle on a specific date, the processor 120 can change a color of the circle to a different color in accordance with user's requirement, change a color of an area of the corresponding date to a different color, or change a display state to a form which can be easily recognized by a user. In this way, when emphasis of a specific date or a schedule (period) is required, the processor 120 can change a display date of the corresponding date or the schedule (period) displayed on the display 150 and then proceed to operation 502.

In other words, when a schedule area on which a handwritten character is input is recognized, if a recognized handwritten character is input to the schedule area, in a case where a color (e.g., a red color) different from a general color is used as a color indicating a range or a special symbol is used, the processor 120 can register an event of the schedule area as an important event. For example, when a palette application for inputting a color is called, a color other than a black color is selected, and a handwritten character is input to a schedule area, the handwritten character can be recognized as an important schedule. When it is determined that a schedule area is configured, a date at which a schedule is registered can be displayed differently from a date at which a schedule is not registered. For example, when it is recognized through an OCR or an OMR that figures or symbols such as "v", " 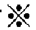 ", and "☆" are included or figures or symbols other than a character is included in schedule contents, a schedule corresponding to a part including the figures or the symbols can be registered as an important schedule. Further, a general schedule and an important schedule can be displayed distinguishably. For example, when a general schedule is configured, the general schedule is configured in a color different from that of a date area on which a schedule is not configured. Further, an important schedule is displayed in at least one of a reversed state, a protruding state, or a depressed state.

Further, the processor 120 can provide an alarm differently with respect to an important data and a general data, and control a configuration for an audio output of the input/output interface 140 to provide an alarm only in a case of the important schedule.

According to an embodiment, when it is determined in operation 512 that an object input is detected from the input/output interface 140, the processor can display an input object on the display 150 in accordance with a user's input, in operation 514. For example, a user can input various objects such as a specific character, a symbol, a number, a figure, etc. using a user's body or a predetermined tool (an electronic pen or a pen). In this way, when a specific object is input, the processor 120 can control to display the input object on the display 150 and proceed to operation 502.

According to an embodiment, it is determined in operation 516 that a user's input, which requests input cancellation, is detected, the processor 120 can remove the input object, in operation 518. For example, when an input signal for requesting input cancellation is detected in a state in which a user inputs a specific character, a symbol, a number, a figure, etc., the processor 120 can remove the object input by a user from the display 150 and then proceed to operation 502.

Although only a case where, when an input cancellation request is detected in operation 516, the processor 120 proceeds to operation 518 is illustrated in an embodiment of FIG. 5, the processor 120 may make a configuration to terminate the routine of FIG. 5 when input cancellation is requested as in operation 516. In another scheme, when an input cancellation request is detected in operation 516, the processor 120 may perform different operations according to whether there is a previous input or not. For example, when input cancellation is requested in operation 516, if it is determined that a specific input is detected by the input/output interface 140, the processor 120 may sequentially remove the corresponding input,, and when input cancellation is requested in operation 516 in a state in which there is no input, the processor may terminate the routine of FIG. 5.

According to an embodiment, when it is determined in operation 520 that a user's input for requesting storage is detected by the input/output interface 140, the processor 120 can map objects input by a user to an application program corresponding thereto and store the mapped object in operation 522. For example, when the application program corresponds to a scheduling input, the processor 120 can store an object input by a user in a schedule corresponding thereto. At this time, the schedule may be divided by a day or more, an hour or more, 10 minutes or more, one minute or more, etc. according to a form of a window (not illustrated) for a scheduling input which can be configured by a user. The dividing of the schedule will be described in more detail with reference to the following drawings.

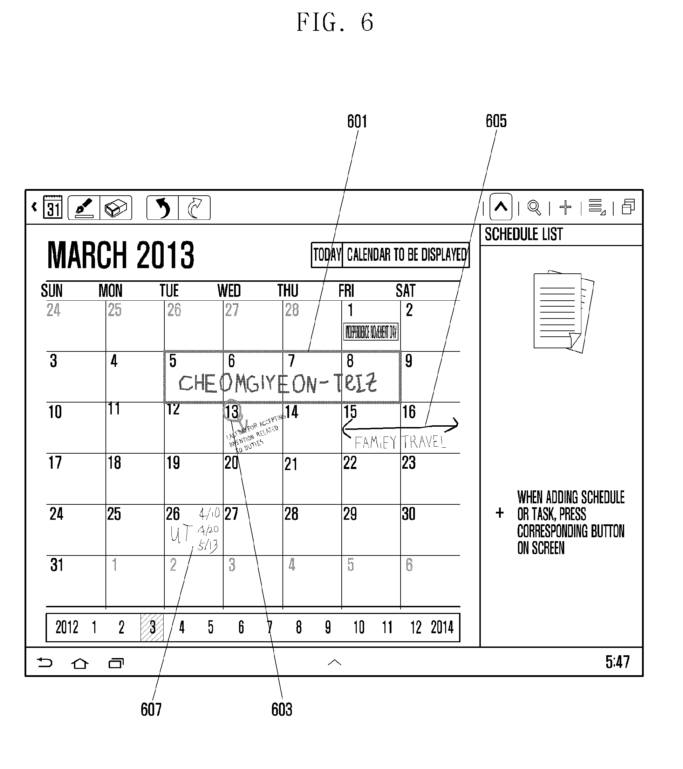

FIG. 6 illustrates an example where objects are input on a monthly scheduling table according to various embodiments of the present disclosure.

Referring to FIG. 6, different four kinds of schedules are exemplified. A first reference numeral 601 exemplifies a schedule from March 5 to March 8, a second reference numeral 603 exemplifies a schedule on March 13, a third reference numeral 605 exemplifies a schedule from March 15 to March 16, and a fourth reference numeral 607 exemplifies a schedule on March 26.

The first schedule from March 5 to March 8 will be described below. As exemplified above, the schedule from March 5 to March 8 may be a state in which different dates are combined into one schedule through a closed polygon 601. Here, the closed polygon 601 may be one object input. Further, contents written at a lower end of the schedule from March 5 to March 8 may be an object input using a part of a human body or a specific tool by a user. As described above, the input using a part of a human body may be various forms such as a touch input which is input by a direct touch of a user, a hovering input which is input not by a direct touch of a user, or a user's gesture. Further, as described above, the specific tool may be a general pen or an electronic pen having a specific function.

In an example of FIG. 6, schedule data "Cheomgiyeon - TRIZ" which is input using acronyms of Korean and English is recognized by an OMR or an OCR and is added to the schedule. At this time, the schedule includes a schedule area and a schedule content.

The second schedule on March 13 exemplifies a case where only one day is displayed as a specific day using a closed curve 603. In this way, the specific day is selected by the circular closed curve 603 on March 13, and as described above, the closed curve may be one object input. An object (e.g., a handwritten character) may be input at a lower end of the schedule on March 13 using a part of a human body or a specific tool by a user. In FIG. 6, the second schedule exemplifies a case where the wording "Last day for accepting disclosure related to duties" is input by handwriting, and as described above, the schedule date may be recognized by an OMR or an OCR and added to the schedule.

The third schedule exemplifies a schedule area from March 15 to March 16 using a bidirectional arrow 605 "<-->". The bidirectional arrow 605 from March 15 to March 16 corresponding to the third schedule may be an object, and a part of March 15 and a part of March 16 may be combined into one schedule through the bidirectional arrow recognized as one object. In FIG. 6, the third schedule exemplifies a case where the wording "Family travel" is input by handwriting, and as described above, the schedule date may be recognized by an OMR or an OCR and added to the schedule.

Finally, only specific schedules are displayed on March 26 in reference numeral 607, and different dates are displayed in contents of the schedule. In this way, when discontinuous specific dates are input, data for the dates may be recognized and schedule information having the same contents as the date may be written on the corresponding dates. For example, information "UT" written on March 26 may be added and written on April 10, April 20, and May 13.

As described above, finally, in an example where reference numeral 607 is displayed, specific schedule data may be displayed and input only within a schedule as in the schedule on March 26 or specific schedule data may be displayed and input within and near the corresponding schedule as in the schedule on March 13.

According to various embodiments of the present disclosure, with regard to data input on a schedule, a space in which data can be input is limited according to a characteristic of a calendar. Therefore, an input object may be reduced and displayed. Thus, data input on March 13 and March 26 as illustrated in FIG. 6 may be data which is displayed by reducing an object actually input by a user. When the data input on March 13 and March 26 is not reduced and displayed, a part of the input object may be displayed in the schedule in consideration of another input space. For example, a part of the first letter "L" and a part of the second letter "a", which are input by a user, may be displayed on schedule data on March 13. When all of objects input as schedule data are identified, the entire schedule data on the corresponding date may be enlarged and identified. When the enlargement is performed in response to a user's input, a plurality of layers may be configured and may be classified into an upper layer and a lower layer. For example, when the entire schedule data on the corresponding date is enlarged, a schedule table may be a lower layer. When two or more different layers are displayed, the layers may be configured in different forms and displayed. For example, a layer of enlarged schedule data may be configured in various forms such as a transparent form, a semi-transparent form, an opaque form, etc. In addition, various effects may be added such that a user can effectively recognize the enlarged and displayed schedule date. For example, various effects such as a shadow effect, a highlighting effect, an embossing effect, etc. may be added.

According to various embodiments of the present disclosure, data input on March 13 and March 26 as illustrated in FIG. 6 may be data which is displayed by reducing an object actually input by a user. When data input as the schedules on March 13 and March 26 is not reduced and displayed but is displayed as it is, the data may be displayed while overlapping an area of a different date. At this time, a layer where overlappingly displayed objects are displayed is configured by a transparent layer, so that a date of the schedule data can be configured to be shown to a user. In contrast, a layer where overlappingly displayed objects are displayed is configured by an opaque layer, so that a date of the schedule data can be configured not to be shown to a user.

Respective schedule contents corresponding to the schedule area illustrated in FIG. 6 can be processed by an OMR and/or an OCR, and the contents can be stored in a form of Table 1.

**Table 1**

| Schedule area | Schedule contents |
|---|---|
| March 13 | Final day for registering invention related to duties |
| March 5 to March 8 | Cheomgiyeon - TRIZ (input as individual schedule) |
| March 15 to March 16 | Family travel |
| March 26, April 10, April 20, May 13 | UT |

In Table 1 as exemplified above, when a character within a designated box of the schedule contents is a date (e.g., April 10, April 20, and May 13), schedule data corresponding to the designated box can be registered in a schedule area of the corresponding date.

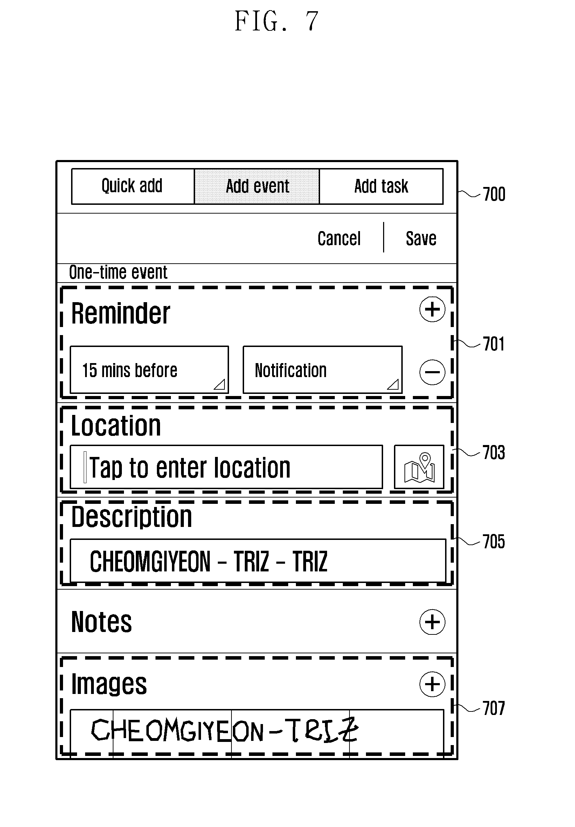

FIG. 7 illustrates a detail data inputting pop-up window of scheduling data according to various embodiments of the present disclosure.

A detailed data inputting pop-up window 700 of scheduling data as exemplified in FIG. 7 can be configured to be popped up through various methods configured in the electronic device 101. According to various embodiments of the present disclosure, a pop-up window can be popped up through various cases such as a case where a specific date in the scheduling table is touched for a time period longer than a predetermined time, a case where a specific date is touched using a specific function of a dedicated pen, a case where a specific date is selected and a more detailed date is requested to be displayed using a menu, etc.

When a detailed schedule pop-up window 700 is popped up on the display 150 in one case of the above cases, a user can input information by selecting a corresponding area. For example, an option, which notifies a user of the corresponding schedule, can be selected in a "Reminder" area 701 of the pop-up window 700. For example, the area "Reminder" may correspond a setting of an alarm. Further, a user can directly input a location of the corresponding schedule to a "Location" area 703. A "Description" area 705 can display a character, such as the wording "Cheomgiyeon - TRIZ" recognized by an OCR, which is recognized through various types of recognition methods such as a character recognition method, etc. Thus, in the "Description" area 705, a user can modify or newly input a character when character information recognized through an OCR is wrong or omitted.

An "Image" area 707 can store a stored original handwritten character in an image form. In the "Image" area 707, a character input by handwriting of a user may be stored as a text or as the handwritten character itself. When the character input by handwriting of a user is converted into a text and a recognized character is not clear, a user can identify the original handwritten character on the "Image" area so as to identify an original input of the handwriting. For example, referring to FIG. 6, a user can identify whether a character recognized through an OCR in the schedule contents from March 5 to March 8 is "R" or "e".

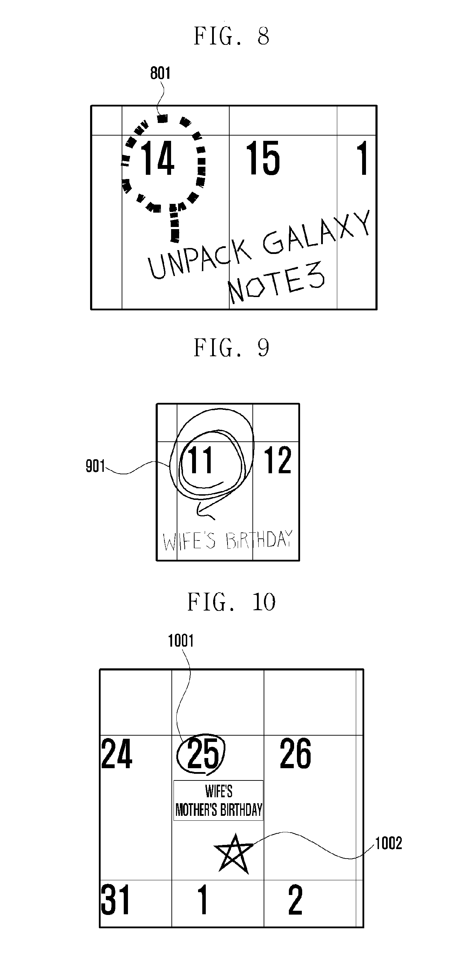

FIG. 8 illustrates an example of a UI view in a state in which an important schedule is input in an electronic device according to various embodiments of the present disclosure.

Referring to FIG. 8, a case where a dotted circle 801 is displayed around the number of 14 is exemplified. In the above description, shapes such as a closed curve, a closed polygon, etc. have been described. However, as exemplified in FIG. 8, a schedule on a specific date or a schedule of a specific period is configured to have a dotted curved line or a dotted polygonal shape. Thus, as exemplified in FIG. 8, a dotted circle 801 may also be an object, and the dotted circle 801 may select a date or designate a range.

Further, a color of the wording "Unpack Galaxy Note 3" written at a lower end may be changed according to a selection of a user. For example, a color of a character input by a user may include various colors such as black, red, blue, etc.

Further, the handwritten character "Unpack Galaxy Note 3" is displayed in an area from 14th to 16th. In the above description, a form in which schedule data is input only at a lower end of the corresponding date is exemplified. Thus, with regard to only a location of the schedule data, a user can determine that a range of the schedule is from 14th to 16th or from 14th to 15th when an error range is considered, based on data of the handwritten character input thereby. However, data written together with an object, which is displayed in a dotted line and selects a specific date, may be date stored in 14th. In contrast, when a schedule is displayed in a dotted line, if it is predetermined to input a schedule from the corresponding date to another specific date, the schedule of FIG. 8 may have a scheduling range from 14th to 16th or a scheduling range from 14th to 15th when it is determined that the last handwritten character "3" does not invade a range of 16th within an allowable error range.

Further, as described above, the wording "Unpack Galaxy Note 3" may be a character provided from an image recognized through an OCR or an OMR. In this way, the recognized image may be mapped to a specific schedule, e.g., scheduling information of 14th, and is stored, as described in FIG. 5.

According to various embodiments of the present disclosure, when a schedule is an important schedule, the corresponding schedule can be displayed in various displaying schemes such as a scheme in which a character color, a character size, or a character font corresponding to an important schedule are changed and the important schedule is displayed, a scheme in which a color of a table of a corresponding date is changed, a scheme in which a table of a corresponding date is inversed, protrudes, or is depressed, etc.

FIG. 9 is a user interface (UI) view illustrating various embodiments in which a handwritten input is recognized as an important schedule according to various embodiments of the present disclosure.

Referring to FIG. 9, when a handwritten input recognized in a schedule area is a pattern 901 which is repeated twice or more, it is determined that the schedule area is an important schedule, so that the processor 120 can control to display the schedule area distinguishably from a general schedule. For example, when it is determined that a schedule area is an important schedule, the processor 120 can change a character color, a character font, or a character size of an input object and then display or store the input object. Further, the processor 120 can display the wording "Wife's birthday" recognized by an OMR or an OCR in a state in which at least one of a case where a color of the wording is changed, a case where the wording is inversed, a case where the wording protrudes, and a case where the wording is depressed is applied.

According to various embodiment of the present disclosure, the processor 120 can interpret that a range for a specific date is designated, by recognizing a closed curve such as "○", "□", and "☆" using an OMR. Further, the processor 120 can register a schedule as an important event in a schedule when it is determined that a designating operation is repeated twice or more or a color designating a range is different from a general color (e.g., a black color or a color similar to a black color). A schedule can be recognized as an important schedule according to a symbol marked on a date or an emphasized range, and an alarm corresponding thereto can be configured. For example, when it is determined that a star shape "☆" is marked on a date, a schedule of the date is displayed as an important schedule, and an alarm may be output at the corresponding date and time or a pop-up window may be displayed before a predetermined time period with respect to a date and time of the corresponding schedule or accurately at the date and time.

FIG. 10 is a UI view illustrating another embodiment in which a handwriting input is recognized as an important schedule according to various embodiments of the present disclosure.

Referring to FIG. 10, when a general circle 1001 is marked on a date of 25th but a symbol "☆" 1002 is marked on a detailed schedule, the schedule can be configured as an important schedule. Otherwise, additionally, when it is recognized that a symbol "☆" 1002 is input by handwriting, a detailed schedule corresponding to an object recognized by an OCR or an OMR is displayed while being changed from a general schedule to an important schedule. For example, when the symbol "☆" 1002 is additionally inserted, a detailed schedule "Wife's mother's birthday" is changed to an important schedule and is then inversed, so that a user can easily identify the detailed schedule.

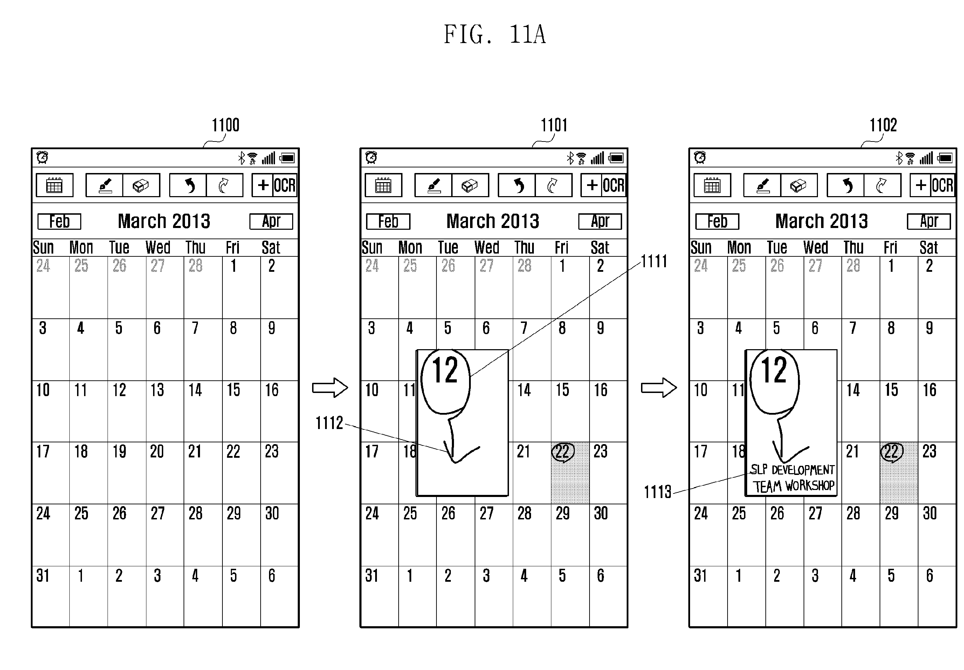

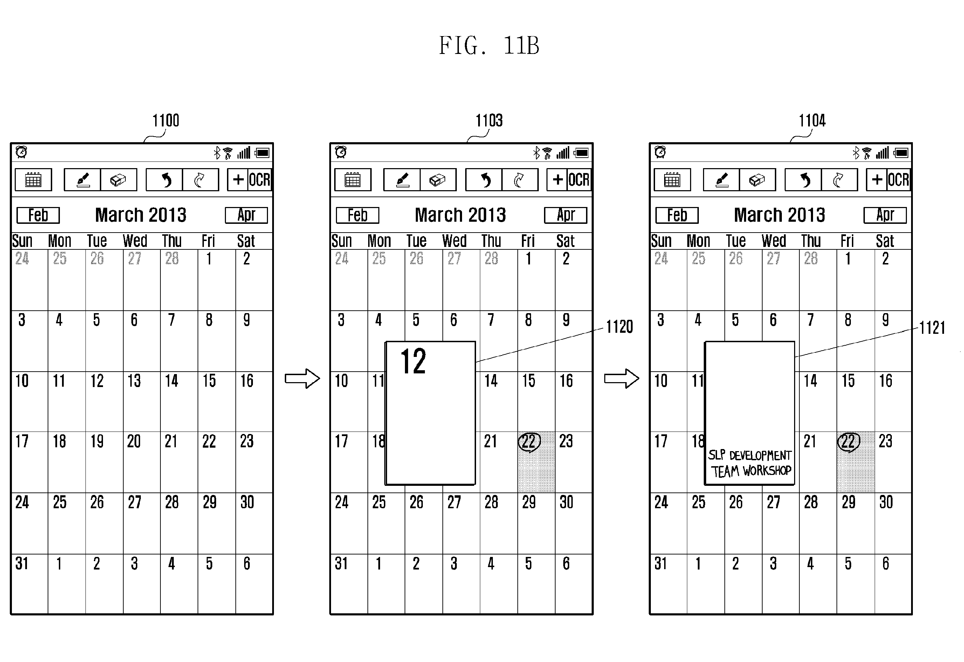

FIGS. 11A and 11B are UI views illustrating a state in which an input object is recognized in a terminal according to various embodiments of the present disclosure.

Referring to FIGS. 11A and 11B, a sequential change of views 1100, 1101, and 1102 and a sequential change of views 1100, 1103, and 1104 will be described.

Referring to FIG. 11A, as exemplified in view 1100, a state in which a calendar of March, 2013 is displayed as a schedule table may be a state in which a schedule table is initially displayed. In this state, as exemplified in view 1101, when a specific date, March 12, is selected and an arrow 1112 is displayed together with a circle as indicated by reference numeral 1111, a display may be changed as in view 1102. That is, as exemplified in view 1102, a schedule input window can be enlarged such that an input window 1113 of the corresponding is enlarged and overlaps another date. Thus, a user can input a handwritten character 1113 to a corresponding area.

Referring to FIG. 11B, as exemplified in view 1100, in a state in which a calendar of March, 2013 is displayed as a schedule table is a state in which a schedule table is initially displayed, when a date of 12th is selected, as exemplified in view 1103, an area of the corresponding date is enlarged as indicated by reference numeral 1120. Thereafter, as exemplified in view 1104, a schedule having a larger number of characters can be input to the enlarged area based on a user's input as indicated by reference numeral 1121.

When the size of the display 150 is 5 inches, an area for each date in the calendar should be displayed in a small size of about 0.5 inches, and thus it may be difficult to perform an input by handwriting. Thus, an area of a date, a range of which is designated, is enlarged according to a user's input, so that convenience of an input can be improved and a range of schedule contents which can be input within a small space can be increased. Further, as described above, the enlarged area can be additionally enlarged or reduced based on a user's input. When a specific date is additionally enlarged, the corresponding date may be enlarged to the maximum size of the display 150.

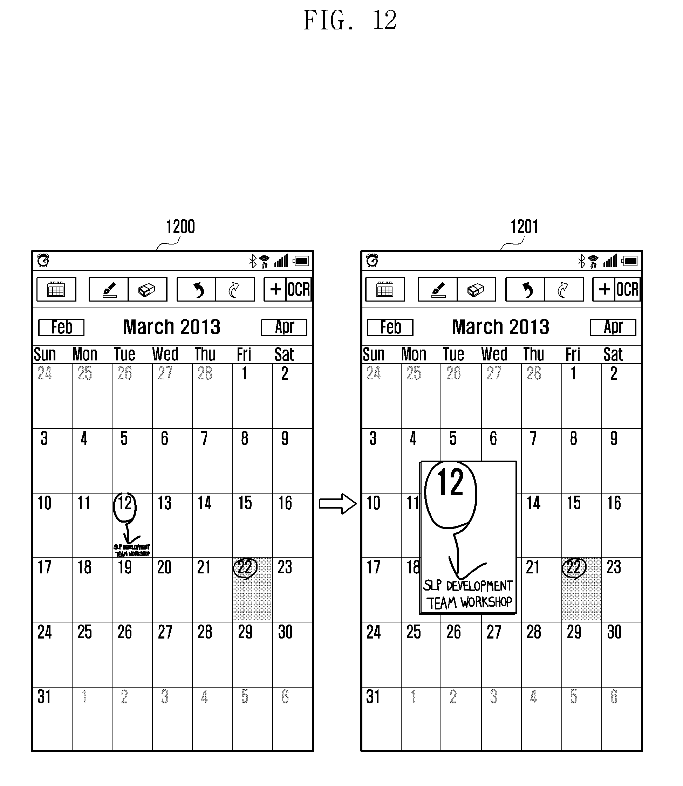

FIG. 12 is a UI view illustrating a state in which an input object is called in an electronic device according to various embodiments of the present disclosure.

FIG. 12 is an example of a case where a content of a specific date among schedules registered by a user is identified.

Referring to FIG. 12, a state of view 1200 may be a scheduling table of March, 2013 in a state in which schedule date is input. In this way, when a date written in the scheduling table is identified, a user can select the corresponding date, e.g., a date of March 12. At this time, various schemes such as a touch input using a part of a human body of a user, a hovering input, a touch input using a dedicated pen such as an electronic pen, a voice input, and a gesture input may be used for the selecting.

When a specific date of March 12 is selected using one scheme from among the above-described schemes, schedule data of the corresponding date is enlarged and displayed as illustrated in view 1201. At this time, the enlarged size may be predetermined at a time of manufacturing an electronic device or may be changed by a setting of a user. The above-described enlarging operation may be performed only in a schedule having an input content.

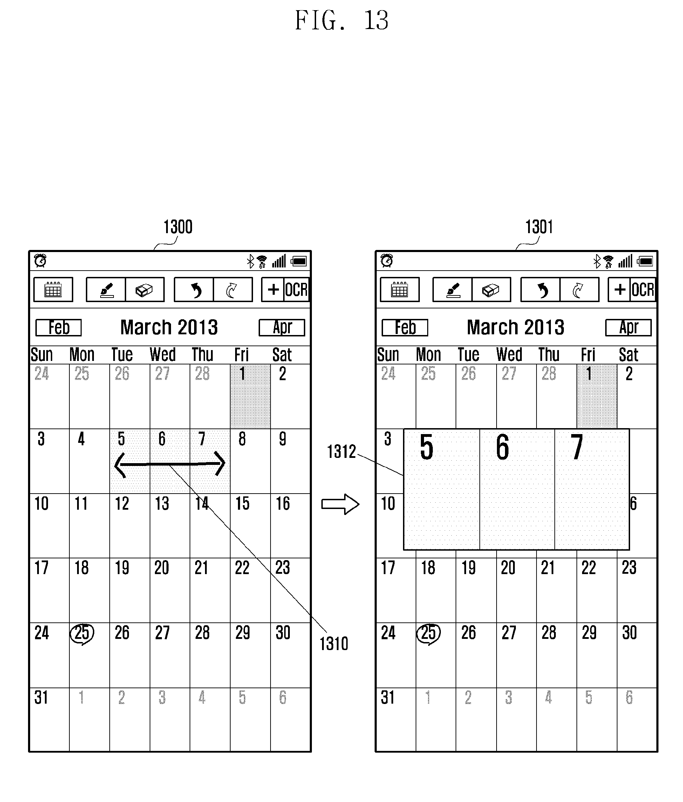

FIG. 13 illustrates a method of enlarging a schedule range when a range designation object is input in an electronic device according to an embodiment of the present disclosure.

According to various embodiments of the present disclosure, a user can designate a range of specific schedules. When a user designates a range in a form of "<--->" from March 5 to March 7, an area of the designated dates may be collectively enlarged and displayed.

For example, as exemplified in view 1300, when a user inputs an object, which designates a specific period as a range, using a touch input by a part of a human body, using a dedicated pen, or using other schemes as indicated by reference numeral 1310, the electronic device can display the designated range as an enlarged state 1312 as exemplified in view 1301. As a result, a user can easily perform an input of a handwritten character using the enlarged area.

As exemplified in view 1300, a selected area configured by a quadrangle may imply one day. In this way, when an area section larger than a range of one day is recognized as one bundle, the processor 120 of the electronic device 101 can control to display the area recognized as one bundle as an enlarged state 1312.

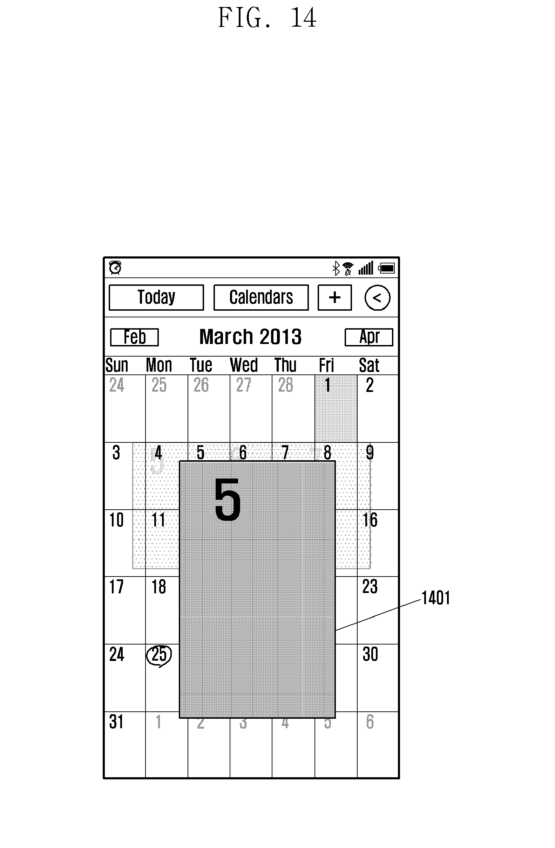

FIG. 14 illustrates a case where a specific region is enlarged in order to input an object in an electronic device according to an embodiment of the present disclosure.

When an input range from March 5 to March 7 is enlarged according to user's intention and then selection of an object input for enlarging a specific date is performed additionally in FIG. 13, the processor 120 can display the corresponding date as an enlarged state 1401 as exemplified in FIG. 14.

At this time, selection of a specific date and selection for an object input may be two inputs or may be one input in a predetermined scheme. For example, the scheme may be a case where a corresponding date is continuously (within a short time) touched a predetermined number of times or more, e.g., two times, a case where a specific date is touched during a predetermined time period or more, e.g., 2 seconds, or a case where a specific date is selected and there is a special input for requesting enlargement.

In this way, when selection for an object input exists at a specific date from among a plurality of enlarged dates, the processor 120 can display the corresponding dates as an enlarged state 1401. A user can more conveniently perform an input of an object such as handwriting through an additional area enlarging method.

In contrast, when a user intends to reduce an enlarged specific area, the electronic device 101 may return to the previous screen again. A touch by a part of a human body, a dedicated pen, or other various input means may be used for reducing an area.

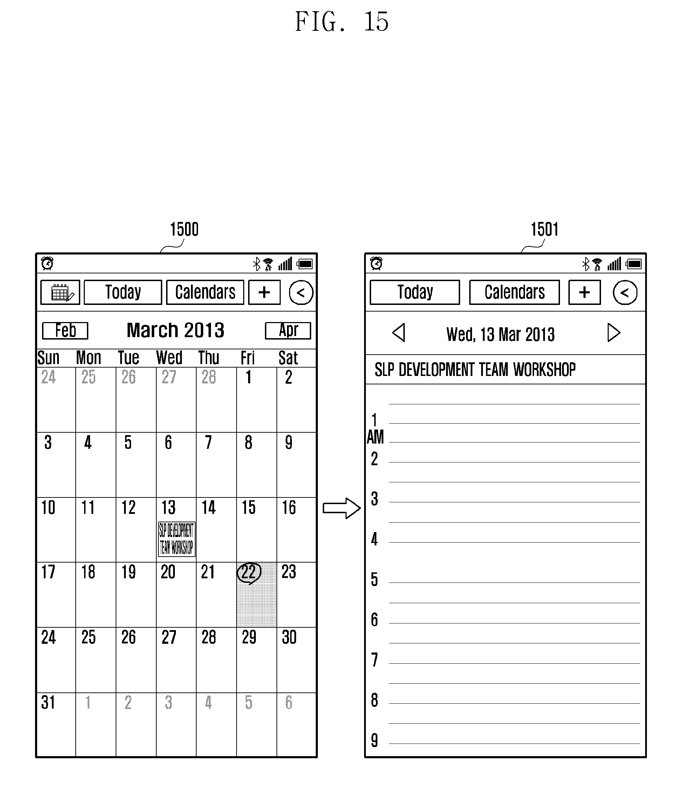

FIG. 15 illustrates an example of display conversion for inputting an object in an electronic device according to various embodiments of the present disclosure.

Referring to FIG. 15, in view 1500, data such as the wording "SLP development team workshop" is located in a schedule of March 13, 2013. The data may be input using a character input scheme, may be input using an object input scheme through an OMR, or may be converted using character recognition of an object input through an OCR.

At this time, a user may want to input more detailed information of the corresponding schedule, e.g., to input an object to a detailed schedule or may want to input a character to a detailed schedule. In this way, when a detailed schedule is required to be displayed, the processor 120 can change a state of the display 150 to a time schedule form on the corresponding date as exemplified in view 1501. In this way, after the display 150 is changed to the time schedule form, a user can input desired data to a corresponding area using a character input scheme or an object input scheme. When the object input scheme is desired, a user can freely input an object such as a handwritten character to a wider space.

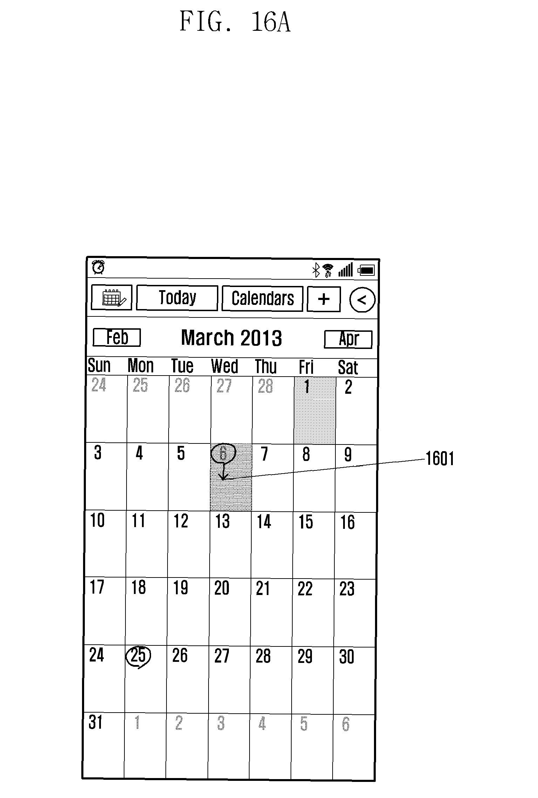

FIGS. 16A to 16E illustrates a method of inputting and identifying an object in an electronic device according to various embodiments of the present disclosure.

As one of various embodiments, FIG. 16A to 16E sequentially exemplify an operation of inputting an object and identifying the input object again, in an electronic device. First, in FIG. 16A, identical to view 1100 in FIG. 11A, a range of a specific date(s) is designated. For example, a user can request designation or enlargement of a range of a specific date(s) using a part of a human body or various devices such as an electronic pen, etc. as exemplified by reference numeral 1601. FIG. 16A exemplifies an example where a symbol for selecting a date, e.g., a circle, is input and a predetermined symbol for requesting enlargement, e.g., an arrow, is continuously input.

Dissimilar to FIG. 16A, a range may be designated not using a circle but using a closed polygon. For example, the range may be designated using a closed polygon such as an ellipse, a quadrangle, a diamond, a pentagon, a hexagon, etc. Further, a direction of the arrow for requesting enlargement may be changed. For example, the direction of the arrow may be different directions such as a right direction, a left direction, an upward direction, etc. in addition to a downward direction. As another method, the range may be designated in other methods not using an arrow, e.g., a method of using an input (press) of a key included in a separate input device such as an electronic pen, a method of maintaining a closed polygon at the last location of the range designation for 1 second or more, etc.

In the above, although a case where different symbols or inputs are used for designating a range and requesting enlargement, an input for designating a range may be recognized as the range designation and the enlargement request.

Further, although a case where a schedule is limited to a specific day is exemplified in FIG. 16A, a schedule of continuous two or more days such as two days, three days, four days, etc. may be designated as a range.

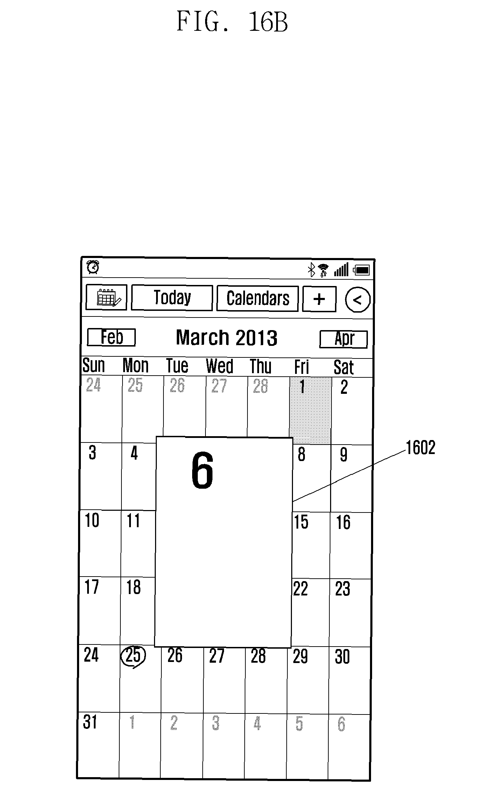

When the range designation and the enlargement request are recognized in FIG. 16A, an electronic device can enlarge and display a date(s) designated as a range as indicated by reference numeral 1602 as exemplified in FIG. 16B. At this time, the displayed size of an area of a date(s) designated as a range may be predetermined when an electronic device is manufactured or may be a size arbitrarily predetermined by a user.

As exemplified in FIG. 16B, a user can input a schedule to an enlarged part using a specific object, e.g., a handwritten character or a character input scheme according to the range designation and the enlargement request, as indicated by reference numeral 1602.

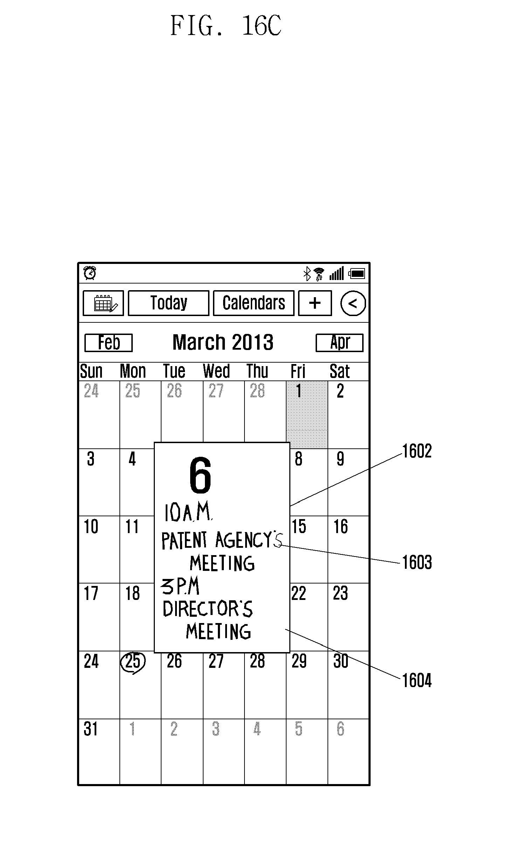

FIG. 16C exemplifies a case where schedules 1603 and 1604 are input to an area 1602, which is enlarged and displayed according to the range designation and the enlargement request, using a handwritten character. Reference numeral 1603 corresponds to a case where a schedule "Patent agency meeting at 10 A.M." is input by a handwritten character input scheme, and reference numeral 1604 corresponds to a case where a schedule "Director's meeting at 3 P.M." is input by a handwritten character input scheme.

The schedule can be completely input by a handwriting input scheme or by a character input scheme, and when the schedule is input by the character input scheme, the schedule can be stored in a memory as it is. However, the schedule input by a handwriting input scheme can be stored in various forms. For example, the schedule input by a handwritten character input scheme may be converted into an image having the handwritten form as it is and only the image may be stored, an image having a handwritten form may be recognized by a character recognition scheme and a recognized character and the handwritten form can be stored together, or an image having a handwritten form may be recognized by a character recognition scheme and only a recognized character may be stored.

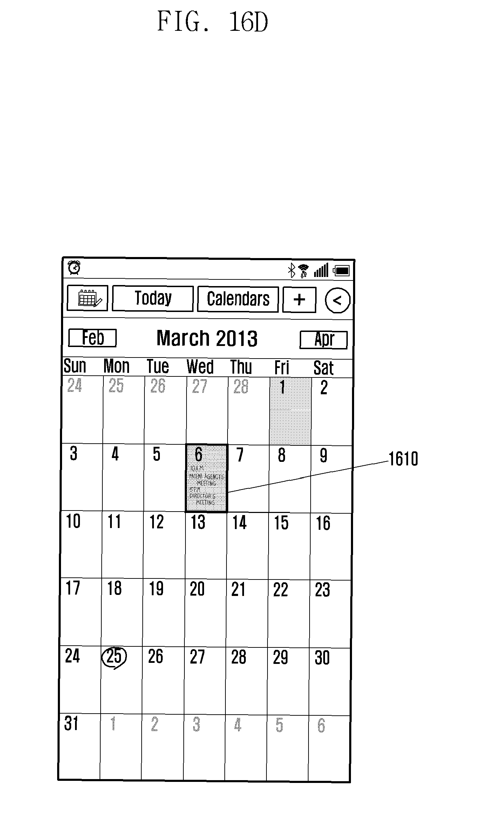

When the schedule is completely input, the enlarged and displayed date(s) is reduced again as illustrated in FIG. 16D. As exemplified in FIG. 16D, the schedule input in FIG. 16C may be displayed on the corresponding date(s) in a reduced form, as indicated by reference numeral 1610.

At this time, as identified in FIG. 16C, since the input handwritten character is very small, it may be difficult to visually recognize the input handwritten character. Thus, various embodiments of the present disclosure provide a method of more easily identifying a schedule of a date(s) input through range designation.

As one of various embodiments of the present disclosure, when a range of a date(s) is designated, if there is input date on the corresponding date(s), a screen may not be changed from FIG. 16A to FIG. 16B but be changed from FIG. 16A to FIG. 16C.

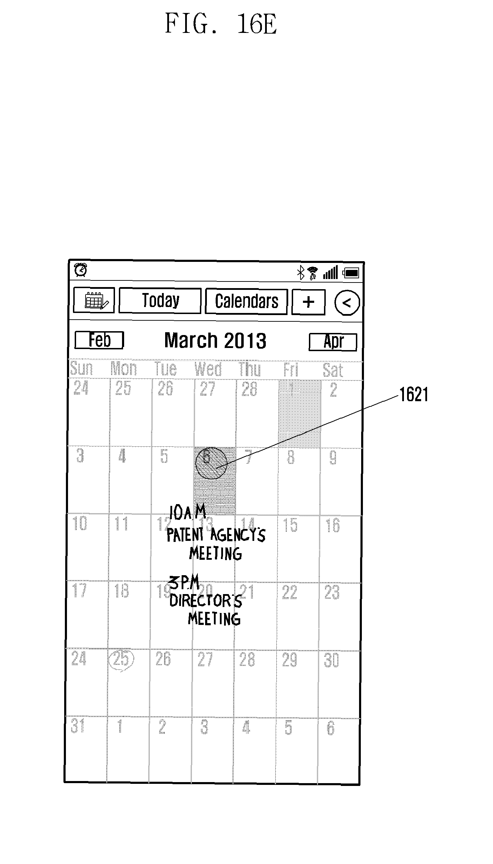

As exemplified in FIG. 16E, when a date(s) input through range designation is selected as indicated by reference numeral 1621, data, which has been stored on a corresponding schedule, can be read and displayed. At this time, the schedule may be displayed in the same scheme as that of FIG. 16C or in the same scheme as that of FIG. 16E.

FIG. 16E illustrates a screen for a method of further enlarging an input object according to various embodiments of the present disclosure. When a user wants to maximally enlarge and display or input a content of a date, the user can request enlargement display from an electronic device by inputting a touch during a predetermined time, e.g., 1 second or more. Reference numeral 1621 corresponds to a reference numeral for describing a case where a user selects a specific date to request the enlargement display.

As exemplified in FIG. 16E, when an output screen for a selected date is enlarged and displayed to a predetermined area or larger, the enlarge screen can be configured by a plurality of layers, i.e., a layer form. For example, the layers may be basically configured by a first layer configured by only information having a form of a calendar and a second layer for displaying a stored schedule in accordance with a selected date. In this case, the first layer may be located at a lowermost part, and the second layer may be located at an uppermost part. Further, the second layer may be configured in an opaque form or a semi-transparent form.

FIG. 16E illustrates an example where the second layer is configured in a semi-transparent form. Thus, since dates on a calendar corresponding to the first layer lower than the second layer is partially covered by the semi-transparent second layer, the dates may be blurredly shown to a user. When the second layer is configured in an opaque form, the first layer may not be shown as the first layer is covered by the second layer.

Further, an enlargement operation for displaying a schedule can be operated only on a date on which there is a previously-input object when the calendar is enlarged maximally, and a user's intention is identified on an initial screen of the calendar so that the calendar can be converted into the maximum screen at one time. The converting method may be various schemes such as a user's input during a predetermined time period and by the predetermined number of times, a predetermined voice command, etc.

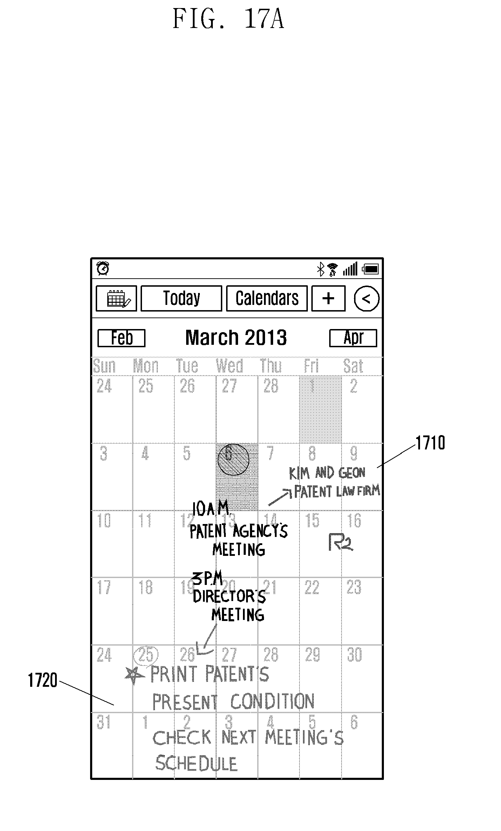

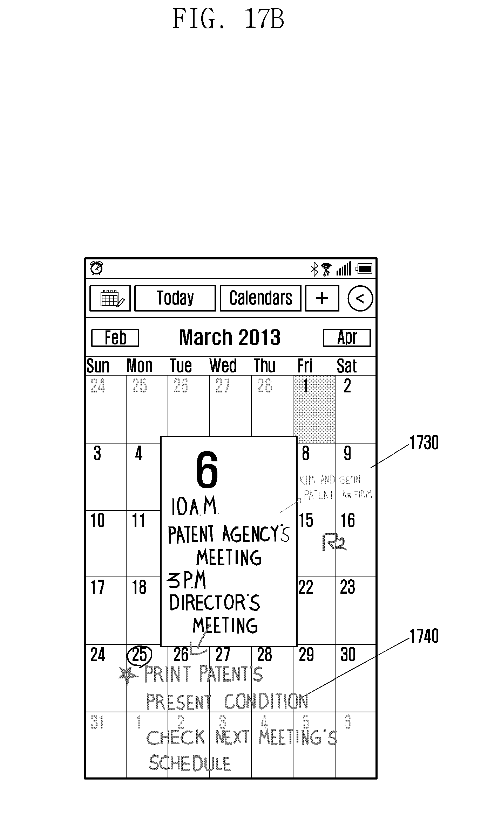

FIGS. 17A and 17B illustrate a method of displaying an input object on a screen in an electronic device according to various embodiments of the present disclosure.

Referring to FIG. 17A, in a state in which a screen is illustrated as in FIG. 16D as described above, it is requested to enlarge the screen to the entire screen. At this time, the following three cases may be possible. First, it is possible to additionally input data such as reference numerals 1710 and 1720 in an enlarged state. Second, only the schedule as exemplified in FIG. 16D is displayed before the enlarged state, and reference numerals 1710 and 1720, which are additional data, are displayed only in the enlarged state. Third, both the first scheme and the second scheme are applied.

In the first case, a schedule can be input to a period having a designated range through operations of FIGS. 16A to 16C. Thereafter, a screen is enlarged as in FIG. 16D or FIG. 16E in order to additionally input a schedule, and an additional schedule is input as in reference numerals 1710 and 1720 of FIG. 17A or and an additional schedule is input as in reference numerals 1730 and 1740 of FIG. 17B. In this way, when the additionally-input schedule is stored in a memory and is then displayed, the additional schedule can be configured not to be displayed as in FIG. 16D.

Further, in the second case, an additional schedule is not displayed in a state in which a screen is displayed as in FIG. 16D. Thus, when a user wants to identify an additional schedule, the additional schedule can be displayed only when the enlargement is performed as in FIG. 17A or FIG. 17B.

In the third case, since the above two cases are applied, the description thereof will be omitted.

According to various embodiments of the present disclosure, an object can be differently classified and stored according to a location of an input object. Objects 1730 and 1740, which are additionally input in FIG. 17B, may be considered to be located outside an area of reference numeral 1602 of FIG. 16C. The objects 1730 and 1740, which correspond to additional data, are classified into additional information of the objects 1603 and 1604 of FIG. 16C, so that when a range designation object such as the object 1601 of FIG. 16A is input, the objects 1730 and 1740 cannot be directly displayed on the screen. The objects 1730 and 1740 may be displayed as an additional input of a user after the range designation such as the object 1601 of FIG. 16A. Otherwise, when an additional operation other than the object 1601 of FIG. 16A is performed, e.g., only when the screen is pressed for a predetermined time period without detachment, only the objects 1730 and 1740 of FIG. 17B are displayed.

According to various embodiments of the present disclosure, a method of inputting an object in an electronic device may include interpreting an input object when the object is input through an application; enlarging and displaying at least some of pieces of data displayed in accordance with a result of the analysis of the object; and displaying a new object on the enlarged area.

According to various embodiments of the present disclosure, the method may further include enlarging a range when the input object is an object for designating the range.

According to various embodiments of the present disclosure, the object for designating the range may be one of object inputs such as a predetermined figure, an arrow, a symbol, a closed curve, and a closed polygon.

According to various embodiments of the present disclosure, the designated range may be selection of one or more dates or times.

According to various embodiments of the present disclosure, when the data is enlarged and displayed, one of a location, a form, a transparency, and a color of the enlarged area can be differently displayed.

According to various embodiments of the present disclosure, the method may further include forming a new layer to display the new layer as an upper layer of the data being displayed, with regard to the form.

According to various embodiments of the present disclosure, the new layer may be a semi-transparent layer.

According to various embodiments of the present disclosure, the application may be an application for managing an object associated with a schedule, a calendar, a memo, or a time.

According to various embodiments of the present disclosure, the object input may correspond to a handwritten character directly input by a user on a screen.

According to various embodiments of the present disclosure, the method may further include when the new object is input, allowing the new object to have a color other than a pre-stored color or determining a degree of importance based on the number of repetitions.

According to various embodiments of the present disclosure, in displaying of the degree of importance, the object can be displayed in a state in which at least one of a location, a size, a form, and a color thereof is different from that of a general object.

According to various embodiments of the present disclosure, the method may further include storing a received new object in the enlarged area.

According to various embodiments of the present disclosure, the method may further include when it is requested to enlarge an area including the stored object, enlarging and displaying the stored object together.

According to various embodiments of the present disclosure, the method may further include reducing and displaying the displayed object to a size before the enlargement of the enlarged area.

While the present disclosure has been shown and described with reference to various embodiments thereof, it will be understood by those skilled in the art that various changes and details may be made therein without departing from the spirit and scope of the present disclosure as defined by the appended claims and their equivalents.

## Claims

1. A method of inputting an object in an electronic device, the method comprising:
interpreting an object input through an application;
enlarging and displaying at least some data in accordance with a result of the interpreting of the object; and
displaying a new object on an enlarged area.

2. The method of claim 1, further comprising, when the object designates a range, enlarging a corresponding range.

3. The method of claim 2, wherein the object that designates a range includes one of a predetermined figure, an arrow, a symbol, a closed curve, and a closed polygon.

4. The method of claim 2, wherein the designated range corresponds to selection of one or more dates or times.

5. The method of claim 1, wherein, when the data is enlarged and displayed, the data is displayed in a state in which one of a location, a form, a transparency, and a color of the data is different from other data.

6. The method of claim 5, further comprising forming a new layer and displaying the new layer as an upper layer of the data being displayed, with regard to the form, wherein the new layer is a semi-transparent layer.

7. The method of claim 1, wherein the application is an application for managing an object associated with at least one of a schedule, a calendar, a memo, and a time,
wherein the object input corresponds to a handwritten character input by a user on a screen.

8. The method of claim 1, further comprising, when the new object is input, displaying the object using a color other than a pre-stored color or distinguishing a degree of importance based on a number of repetitions wherein, in the displaying of the degree of importance, the degree of importance is displayed in a state in which at least one of a location, a size, a form and a color of the degree of importance is different from that of a general object.

9. The method of claim 1, further comprising storing a received new object in the enlarged area; and when it is requested to enlarge the area including the stored object, enlarging and displaying the stored object together.

10. The method of claim 12, further comprising reducing and displaying the displayed object to a size of the object before enlargement of the enlarged area.

11. An electronic device comprising:
a display configured to display a character or a graphic;
a memory configured to store an application or object data input by a user;
an input/output interface configured to receive the object data from a user; and
a processor configured to:
control to, when an object for requesting designation of a range of some data displayed on the display and enlargement of the designated range is input via the input/output interface, enlarge and display the designated range on the display,
control to, when an object is input on the enlarged area via the input/output interface, display the input object on the display, and
control to, when it is requested to store the input object, store the input object at the designated range in the memory together.

12. The electronic device of claim 11, wherein the processor is further configured to control to, when it is requested via the input/input interface to enlarge the stored object, form a new layer and display the new layer as an upper layer of data being displayed.

13. The electronic device of claim 12, wherein the processor is further configured to:
control to, when an additional object is input to the new layer displayed on the display via the input/output interface, display the input object on the display, and
control to, when it is requested to store the input object, add the input object to the stored data and store the added input object in the memory.

14. The electronic device of claim 11, wherein, when one of object inputs comprises one of a predetermined figure, an arrow, a symbol, a closed curve, and a closed polygon is input, the processor is further configured to determine the input as the range designation.

15. The electronic device of claim 11, wherein the data displayed on the display corresponds to data associated with at least one of a schedule, a calendar, a memo, or a time.
